(19) Europäisches Patentamt / European Patent Office / Office européen des brevets

(11) **EP 4 572 224 B1**

(12) **EUROPEAN PATENT SPECIFICATION**

(45) Date of publication and mention
of the grant of the patent:
**01.07.2026 Bulletin 2026/27**

(21) Application number: **23216095.2**

(22) Date of filing: **13.12.2023**

(51) International Patent Classification (IPC):
$H04L\ 9/08^{(2006.01)}$    $H04B\ 10/70^{(2013.01)}$

(52) Cooperative Patent Classification (CPC):
**H04L 9/0852; H04B 10/70**

(54) **METHODS AND SYSTEMS FOR QUANTUM KEY DISTRIBUTION**

VERFAHREN UND SYSTEME ZUR QUANTENSCHLÜSSELVERTEILUNG

PROCÉDÉS ET SYSTÈMES DE DISTRIBUTION QUANTIQUE DE CLÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.06.2025 Bulletin 2025/25**

(73) Proprietor: **Terra Quantum AG
9000 St. Gallen (CH)**

(72) Inventors:
• **Vinokour, Valerii
9000 St. Gallen (CH)**
• **Lesovik, Gordey
9000 St. Gallen (CH)**
• **Pastushenko, Valeria
9000 St. Gallen (CH)**
• **Kronberg, Dimitry
9000 St. Gallen (CH)**
• **Kodukhov, Alexey
9000 St. Gallen (CH)**

• **Sekatski, Pavel
9000 St. Gallen (CH)**

(74) Representative: **Lucke, Andreas
Boehmert & Boehmert
Anwaltspartnerschaft mbB
Pettenkoferstrasse 22
80336 München (DE)**

(56) References cited:
**US-A1- 2008 037 998**

• **KARPINSKI MICHAL ET AL: "Control and
Measurement of Quantum Light Pulses for
Quantum Information Science and Technology",
vol. 4, no. 9, 23 July 2021 (2021-07-23), pages
2000150, XP093075181, ISSN: 2511-9044,
Retrieved from the Internet <URL:https://
onlinelibrary.wiley.com/doi/full-xml/10.1002/
qute.202000150> DOI: 10.1002/qute.202000150**

**Description**

Technical Field

The present disclosure refers to methods and systems for quantum key distribution, in particular with regard to techniques for encoding classical information into quantum signals and decoding classical information from quantum signals.

Background

A typical quantum key distribution (QKD) protocol comprises two main stages: quantum communication and classical post-processing. In principle, in a transmitter device ("*Alice*") a random bit sequence is generated, encoded into quantum states and sent to a receiver device (*"Bob"*) via a quantum channel. The encoding regularly comprises generating coherent states (e.g., by a laser) and applying optical elements such as phase shifters, attenuators, or beam-splitters. The transmitted states are measured in the receiver device, after which classical post-processing is performed for establishing a shared secret key.

In practical optical QKD setups, classical information can be encoded into physical systems using:

- polarization encoding (e.g., the BB84 protocol): different logical bits are translated into different polarizations of single-photon or multi-photon signals / optical pulses,
- phase encoding (e.g., DPS QKD): different logical bits are translated into different phases of single-photon or multi-photon signals,
- intensity encoding (e.g., B92 using coherent states): different logical bits are translated into different intensities of optical pulses, or
- time encoding (e.g., COW protocol): information is encoded in time positions of optical pulses.

UK patent application GB 2 529 228 A relates to interference methods for quantum communication systems. Reference is made to time varying gain modulation comprising arbitrary pulse shapes. However, encoding of classical information is carried out using a conventional BB84 method with setting phases for entire bit-carrying signals.

United States patent US 10 153 848 B2 pertains to a transmitter for a continuous variable quantum communication system. Sequences of light pulses are created such that subsequent light pulses have a different phase or intensity with respect to each other.

Chinese patent application CN 110 620 655 A discloses intensity modulation of light pulses and subsequent phase modulation in the context of quantum key distribution. Intensity modulation (of entire pulses) is carried out to create decoy states. In CN 205 961 140 U, a light intensity modulator is described, which acts on the optical signal before encoding or after phase encoding. Intensity is not connected with encoding, but for decoy states.

US patent application 2008 / 0 037 998 A1 relates to a polarization-controlled encoding method, encoder and quantum key distribution system, which is characterized in that polarization maintaining light path or 90 degree rotation Faraday mirror are used inside the encoder to keep the polarization of the output pulses same, and that in the quantum key distribution system employing the polarization-controlled encoder the pulse emitted from transmitter is unidirectional-transmitted to receiver and then quantum key distribution is implemented using interference in the pulses according to the quantum key distribution protocol.

Karpinski et al., Adv. Quantum Technol. 2021, 4, 2000150, describe methods to control and measure quantum light pulses based upon deterministic application of targeted phases in time and frequency domains.

Summary

It is an object of the present disclosure to provide improved techniques for encoding classical information into quantum signals and decoding classical information from quantum signals in quantum key distribution.

For solving the problem, an encoding method, a decoding method, a method for quantum key distribution, a transmitter device, a receiver device, and a system for quantum key distribution are provided according to the independent claims. Further embodiments are disclosed in dependent claims.

According to an aspect of the invention, an encoding method for quantum key distribution is provided, the method being carried out in a transmitter device having a classical processor and means for preparing and transmitting quantum signals, the method comprising:

- generating an encoder initial bit sequence;
- generating, from the encoder initial bit sequence, a quantum signal comprising a plurality of optical pulses, wherein generating each optical pulse of the plurality of optical pulses comprises at least one of:

- modulating an intensity profile of the optical pulse according to an intensity function which depends on a time and on a first encoder value of at least one first bit of the encoder initial bit sequence; and
- modulating a phase profile of the optical pulse according to a phase function which depends on a time and a second encoder value of at least one second bit of the encoder initial bit sequence;

- transmitting the plurality of optical pulses to a receiver device via a quantum channel; and
- determining a shared key shared between the transmitter device and the receiver device from the encoder initial bit sequence by classical post-processing and at least one of transmitting classical information to the receiver device and receiving further classical information from the receiver device (12).

According to another aspect, a decoding method for quantum key distribution is provided, the method being carried out in a receiver device having a classical processor and means for receiving and measuring quantum signals, the method comprising:

- receiving a quantum signal comprising a plurality of optical pulses from a transmitter device via a quantum channel;
- determining a decoder initial bit sequence from the plurality of optical pulses, the determining comprising, for each optical pulse, at least one of:

- determining an approximate intensity profile of the optical pulse by measuring a plurality of intensity values of the optical pulse for a plurality of time bins, and determining, from the approximate intensity profile, a first decoder value of at least one first bit of the decoder initial bit sequence, and
- determining an approximate phase profile of the optical pulse by measuring a plurality of phase values of the optical pulse for a plurality of time bins, and determining, from the approximate phase profile, a second decoder value of at least one second bit of the decoder initial bit sequence; and

- determining a shared key shared between the transmitter device and the receiver device from the decoder initial bit sequence by classical post-processing and at least one of receiving classical information from the transmitter device and transmitting further classical information to the transmitter device.

According to another aspect, a method for quantum key distribution is provided, the method being carried out in a system comprising a transmitter device having a classical processor and means for preparing and transmitting quantum signals and a receiver device having a further classical processor and means for receiving and measuring quantum signals. The method comprises:

- generating an encoder initial bit sequence in the transmitter device;
- generating, from the encoder initial bit sequence, a quantum signal comprising a plurality of optical pulses in the transmitter device, wherein generating each optical pulse of the plurality of optical pulses comprises at least one of:

- modulating an intensity profile of the optical pulse according to an intensity function which depends on a time and on a first encoder value of at least one first bit of the encoder initial bit sequence and
- modulating a phase profile of the optical pulse according to a phase function which depends on a time and a second encoder value of at least one second bit of the encoder initial bit sequence;

- transmitting the plurality of optical pulses from the transmitter device to the receiver device via a quantum channel and receiving the plurality of optical pulses in the receiver device;
- determining a decoder initial bit sequence from the plurality of optical pulses, the determining comprising for each optical pulse at least one of:

- determining an approximate intensity profile of the optical pulse by measuring a plurality of intensity values of the optical pulse for a plurality of time bins, and determining, from the approximate intensity profile, a first decoder value of at least one first bit of the decoder initial bit sequence; and
- determining an approximate phase profile of the optical pulse by measuring a plurality of phase values of the optical pulse for a plurality of time bins, and determining, from the approximate phase profile, a second decoder value of at least one second bit of the decoder initial bit sequence; and

- determining, in the transmitter device from the encoder initial bit sequence and in the receiver device from the decoder initial bit sequence, by classical post-processing and at least one of transmitting classical information from the transmitter device to the receiver device and transmitting further classical information from the receiver device to the transmitter device, a shared key shared between the transmitter device and the receiver device.

According to another aspect, a transmitter device for quantum key distribution is provided, comprising a classical processor and means for preparing and transmitting quantum signals and being configured to carry out the following steps:

- generating an encoder initial bit sequence;
- generating, from the encoder initial bit sequence, a quantum signal comprising a plurality of optical pulses, wherein generating each optical pulse of the plurality of optical pulses comprises at least one of:

  - modulating an intensity profile of the optical pulse according to an intensity function which depends on a time and on a first encoder value of at least one first bit of the encoder initial bit sequence and
  - modulating a phase profile of the optical pulse according to a phase function which depends on a time and a second encoder value of at least one second bit of the encoder initial bit sequence,

- transmitting the plurality of optical pulses to a receiver device via a quantum channel; and
- determining a shared key shared between the transmitter device and the receiver device from the encoder initial bit sequence by classical post-processing and at least one of transmitting classical information to the receiver device and receiving further classical information from the receiver device.

According to another aspect, a receiver device for quantum key distribution is provided, comprising a classical processor and means for receiving and measuring quantum signals and being configured to carry out the following steps:

- receiving a quantum signal comprising a plurality of optical pulses from a transmitter device via a quantum channel,
- determining a decoder initial bit sequence from the plurality of optical pulses, the determining comprising for each optical pulse at least one of:

  - determining an approximate intensity profile of the optical pulse by measuring a plurality of intensity values of the optical pulse for a plurality of time bins and determining, from the approximate intensity profile, a first decoder value of at least one first bit of the decoder initial bit sequence, and
  - determining an approximate phase profile of the optical pulse by measuring a plurality of phase values of the optical pulse for a plurality of time bins and determining, from approximate phase profile, a second decoder value of at least one second bit of the decoder initial bit sequence; and

- determining a shared key shared between the transmitter device and the receiver device from the decoder initial bit sequence by classical post-processing and at least one of receiving classical information from the transmitter device and transmitting further classical information to the transmitter device.

According to another aspect, a system for quantum key distribution is provided, the system comprising a transmitter device having a classical processor and means for preparing and transmitting quantum signals and a receiver device having a further classical processor and means for receiving and measuring quantum signals. The system is configured to carry out the following steps:

- generating an encoder initial bit sequence in the transmitter device;
- generating, from the first initial bit sequence, a quantum signal comprising a plurality of optical pulses in the transmitter device, wherein generating each optical pulse of the plurality of optical pulses comprises at least one of:

  - modulating an intensity profile of the optical pulse according to an intensity function which depends on a time and on a first encoder value of at least one first bit of the encoder initial bit sequence; and
  - modulating a phase profile of the optical pulse according to a phase function which depends on a time and a second encoder value of at least one second bit of the encoder initial bit sequence,

- transmitting the plurality of optical pulses from the transmitter device to the receiver device via a quantum channel and receiving the plurality of optical pulses in the receiver device;
- determining a decoder initial bit sequence from the plurality of optical pulses, the determining comprising for each optical pulse at least one of:

- determining an approximate intensity profile of the optical pulse by measuring a plurality of intensity values of the optical pulse for a plurality of time bins, and determining, from the approximate intensity profile, a first decoder value of at least one first bit of the decoder initial bit sequence, and

- determining an approximate phase profile of the optical pulse by measuring a plurality of phase values of the optical pulse for a plurality of time bins and determining, from approximate phase profile, a second decoder value of at least one second bit of the decoder initial bit sequence; and

- determining, in the transmitter device from the encoder initial bit sequence and in the receiver device from the decoder initial bit sequence, by classical post-processing and at least one of transmitting classical information from the transmitter device to the receiver device and transmitting further classical information from the receiver device to the transmitter device, a shared key shared between the transmitter device and the receiver device.

Thus, modulating the intensity profile of each optical pulse particularly depends on the first encoder value of the at least one first bit of the encoder initial bit sequence. Further, modulating the phase profile of each optical pulse depends on the second encoder value of the at least one second bit of the encoder initial bit sequence.

As a result, a shared key may be determined in a more robust manner, in particular for increased values of possible information leakage to an eavesdropper. High intensity quantum states with comparably weak distinguishability may be employed. In contrast, conventional quantum cryptography assumes that a potential eavesdropper may obtain all losses occurring in the quantum channel between the legitimate parties. Thus, weak coherent states with only few photons per signal are generally used.

Due to their (non-trivial) time-dependency, the intensity function and the phase function may be assumed to be non-constant in time. In other words, the intensity function and the phase function may be considered to vary with time. Analogously, the intensity function and the phase function may be considered to vary with the first encoder value and, respectively, second encoder value. Further, the modulating of the intensity profile and the modulating of the phase profile may be considered to depend on time and on the first encoder value and, respectively, the second encoder value.

The time-dependent intensity and/or phase profiles may vary fast in time, making information on the encoded logical bits contained in the scattered radiation very difficult to retrieve for an eavesdropper. Thus, security with respect to conventional encoding routines is substantially increased.

The quantum signal may comprise a plurality of quantum states. For example, each quantum state may correspond to one of the optical pulses. Each optical pulse may comprise a plurality of photons.

Each optical pulse may correspond to an optical wave-packet which starts and ends on a time scale when its (instant) intensity drops to zero and/or below a noise level, which may, e.g., be between 0.01 % and 1.0 % of the average peak value of the plurality of optical pulses. A pulse length of an optical pulse may correspond to the difference between its start and end on the time scale.

The intensity (time-)profile (shape) of an optical pulse may correspond to the intensity and/or photon number and/or optical power of the optical pulse depending on time. The phase (time-)profile of an optical pulse may correspond to its phase depending on time.

The encoder initial bit sequence may be randomly generated, preferably using a quantum random number generator (QRNG). Alternatively, a classical pseudo random number generator may be employed.

The at least one first bit of the encoder initial bit sequence may be different from the at least one second bit of the encoder initial bit sequence. Thus, more information can be encoded in the optical pulses.

Alternatively, the at least one first bit and the at least one second bit of the encoder initial bit sequence may be the same. In this case, the intensity function may depend on time and on a (first encoder) value of at least one (first) bit of the encoder initial bit sequence and the phase function may depend on time and the (first encoder) value of the at least one (first) bit of the encoder initial bit sequence. Hence, the same first bit or first bits may be encoded in both intensity and phase, resulting in increased redundancy and robustness (e.g., to noise).

The at least one first bit of the decoder initial bit sequence may be different from the at least one second bit of the decoder initial bit sequence. Alternatively, the at least one first bit and the at least one second bit of the decoder initial bit sequence may be the same.

At least one of the first encoder value, the second encoder value, the first decoder value, and the second decoder value may be a binary value. For example, in case the intensity function depends on a single first bit of the encoder initial bit sequence, the first encoder value may be a bit value, i.e., the first encoder value may be "0" or "1". In case the intensity function depends on two first bits of the encoder initial bit sequence, the first encoder value may be one of "00", "01", "10", and "11".

The classical post-processing, transmitting classical information to the receiver device, and receiving further classical information from the receiver device may comprise classical post-processing, transmitting and receiving during at least one of bit reconciliation, post selection, error estimation, error correction, and privacy amplification. The classical post-processing, receiving classical information from the transmitter device, and transmitting further classical information to the transmitter device may comprise classical post-processing, transmitting and receiving during at least one of bit reconciliation, post selection, error estimation, error correction, and privacy amplification.

The total number of photons of each of the plurality of optical pulses and for each first encoder value may be constant.

The (each) optical pulse may be generated from a (pulsed) laser beam and/or using a Mach-Zehnder interferometer (of the encoder device). The Mach-Zehnder interferometer may comprise a first phase modulator, a second phase modulator, a first beam splitter, and a second beam splitter. The laser beam may pass through the first beam splitter, the first phase modulator, the second beam splitter, and the second phase modulator.

Before modulation, each optical pulse may comprise, e.g., a rectangular intensity profile. In particular, before modulation, each optical pulse may comprise constant optical power (for the duration of the optical pulse).

The first beam splitter and/or the second beam splitter may be a 50:50 beam splitter. The laser beam may be split at the first beam splitter (into a first and a second part) and recombined at the second beam splitter. The laser beam may further be (again) split at the second beam splitter (into a third and a fourth part). The first part may pass the first phase modulator. The second part may pass directly to the second beam splitter. The third part may be transmitted to a control detector. The fourth part may pass the second phase modulator and subsequently be transmitted to the quantum channel (as the optical pulse).

The input optical power of the laser for generating the optical pulses may be from 0.15 nW to 100.00 nW, preferably from 1 nW to 20 nW. Each of the optical pulses may have a photon number from 100 to 80 000, preferably from 800 to 15 000. The laser may, e.g., comprise a DFB PM laser diode. A central wavelength of the optical pulses may be between 1510 nm and 1550 nm, preferably between 1529 nm and 1531 nm, more preferably at 1530 nm. The line width may be 2 MHz or less.

Each of the optical pulses (after modulation) may comprise a (time-dependent) optical power from 0.1 nW to 50.0 nW (between its start and end on the time scale), preferably from 1 nW to 20 nW, more preferably from 5 to 15 nW.

The intensity profile may be modulated by at least one of a first phase modulator and a laser source intensity (input intensity). The phase profile may be modulated by the second phase modulator.

The intensity function may comprise, depending on the first encoder value, an oscillatory component, preferably with time-dependent (instantaneous) frequency. Further, the phase function may comprise, depending on the second encoder value, a (further) oscillatory component with time-dependent frequency.

Generally, the intensity function and/or the phase function may comprise at least two (local) maxima.

Modulating the intensity profile of the optical pulse according to (with) the intensity function may comprise at least one of (pointwise) multiplying the intensity profile with the intensity function, convolving the intensity profile with the intensity function, and (pointwise) adding the intensity function to the intensity profile. Further, modulating the phase profile of the optical pulse according to (with) the phase function may comprise at least one of (pointwise) multiplying the phase profile with the phase function, convolving the phase profile with the phase function, and (pointwise) adding the phase function to the phase profile.

For each first encoder value, the intensity function may be unique. In other words, for each first encoder value, the intensity function may be different from the intensity function for another first encoder value. In particular, for each first encoder value, the intensity function may have a unique time evolution. For example, for each first encoder value, the intensity function may be different from a constant multiple of the intensity function for another first encoder value. Correspondingly, for each second encoder value, the phase function may be unique. In other words, for each second encoder value, the phase function may be different from the phase function for another second encoder value. In particular, for each second encoder value, the phase function may have a unique time evolution. For example, for each second encoder value, the phase function may be different from a constant multiple of the phase function for another second encoder value.

The intensity function and the phase function may be the same for coinciding first encoder value and second encoder value. Alternatively, the intensity function and the phase function may be different for coinciding first encoder value and second encoder value and, in particular for any (pair of) first encoder value and second encoder value.

The intensity function and/or the phase function may be quasiperiodic.

For first encoder value $a$, the oscillatory component may have the form $c_a\cos(\zeta_a(t) + \eta_a)$ with factor $c_a$, angle $\eta_a$ and angular function $\zeta_a(t)$ depending on the first encoder value. The factor $c_a$ and the angle $\eta_a$ may also be constant with respect to the first encoder value. In other words, the oscillatory component may have the form $c\cos(\zeta_a(t) + \eta)$. For second encoder value $a$, the further oscillatory component may have the form $\tilde{c}_a\cos(\tilde{\zeta}_a(t) + \tilde{\eta}_a)$ with further factor $\tilde{c}_a$, further angle $\tilde{\eta}_a$ and further angular function $\tilde{\zeta}_a(t)$ depending on the second encoder value. The further factor $\tilde{c}_a$ and the further angle $\tilde{\eta}_a$ may also be constant with respect to the second encoder value. In other words, the oscillatory component may have the form $\tilde{c}\cos(\tilde{\zeta}_a(t) + \tilde{\eta})$.

The oscillatory component and/or the further oscillatory component may comprise oscillations with an instantaneous period (local period) from 1 ns to 50 ns, preferably from 1 ns to 20 ns, more preferably from 1 ns to 10 ns. The instantaneous period may be change with time. The oscillatory component may also comprise oscillations with an instantaneous frequency (local frequency) from 10 MHz to 500 MHz, preferably from 45 MHz to 300 MHz, more preferably from 70 MHz to 130 MHz. The instantaneous frequency may change with time.

The intensity function may also comprise a constant (offset) component (a component constant in time). The phase function may also comprise a further constant (offset) component. The intensity function may comprise a sum of the oscillatory component and the constant component. The phase function may comprise a sum of the further oscillatory component and the further constant component.

The intensity function may comprise, depending on the first encoder value, a frequency chirp component, preferably at least one of a linear frequency chirp component, a quadratic frequency chirp component, a cubic frequency chirp component, and an exponential frequency chirp component. The phase function may comprise, depending on the second encoder value, a (further) frequency chirp component, preferably at least one of a linear frequency chirp component, a quadratic frequency chirp component, a cubic frequency chirp component, and an exponential frequency chirp component. The (further) oscillatory component may be or may comprise the (further) frequency chirp component.

The frequency chirp component may comprise a chirp rate depending on the first encoder value. The further frequency chirp component may comprise a further chirp rate depending on the second encoder value. The (further) chirp rate may be unique for each first (second) value.

The intensity function may depend on the first encoder value of (at least) two first bits of the encoder initial bit sequence and/or the phase function may depend on the second encoder value of (at least) two second bits of the encoder initial bit sequence.

In other words, generating each optical pulse of the plurality of optical pulses may comprise at least one of: modulating an intensity profile of the optical pulse according to an intensity function which depends on time and on a first encoder value of at least two first bits of the encoder initial bit sequence, and modulating a phase profile of the optical pulse according to a phase function which depends on time and a second encoder value of at least two second bits of the encoder initial bit sequence.

The intensity function may also depend on the first encoder value of at least three first bits of the encoder initial bit sequence and/or the phase function may depend on the second encoder value of at least three second bits of the encoder initial bit sequence. The intensity function may depend on the first encoder value of at least four first bits of the encoder initial bit sequence and/or the phase function may depend on the second encoder value of at least four second bits of the encoder initial bit sequence.

In general, the intensity function may depend on the first encoder value of at least one first bit and at most 100 first bits (in particular, at most 20 first bits; especially at most 4 first bits) of the encoder initial bit sequence. The phase function may depend on the second encoder value of at least one second bit and at most 100 second bits (in particular, at most 20 second bits; especially at most 4 second bits) of the encoder initial bit sequence.

In case the intensity (phase) function depends on one first (second) bit, the intensity (phase) profile may be modulated according to two different shapes (according to the intensity (phase) function for bit value 0 and according to the intensity (phase) function for bit value 1). In case the intensity (phase) function depends on two first (second) bits, the intensity (phase) profile may be modulated according to four different shapes (according to the intensity (phase) function for bit values 00, 01, 10, and 11). In general, in case the intensity (phase) function depends on n first (second) bits, the intensity (phase) profile may be modulated according to $2^n$ different shapes.

The first bits of the encoder initial bit sequence may be different from the second bits of the first bit sequence. Alternatively, the first bits and the second bits may be the same or may partially overlap.

Each optical pulse may have a pulse length from 1 ns to 1000 ns, preferably from 50 ns to 200 ns, more preferably from 80 ns to 120 ns. Each optical pulse may have (essentially) the same pulse length. Each optical pulse may have a pulse length different from an average pulse length of the plurality of optical pulses by at most 0.1 %.

Modulating the intensity profile and/or the phase profile may be carried out such that the pulse length of each optical pulse is changed by at most 10 %, preferably at most 5 %.

Determining the first decoder value may comprise comparing the approximate intensity profile with ideal approximate intensity profiles (for different possible first encoder values). Determining the second decoder value may comprise comparing the approximate phase profile with ideal approximate phase profiles (for different possible second encoder values).

The approximate intensity profile may comprise the plurality of intensity values. The approximate phase profile may comprise the plurality of phase values. For each time bin, the approximate intensity profile may comprise a corresponding intensity value and/or the approximate phase profile may comprise a corresponding phase value.

Measuring the intensity values and/or the phase values (for the plurality of time bins) may comprise carrying out heterodyne measurements for each time bin. Carrying out the heterodyne measurements may include splitting a (received) optical pulse into two beams which interfere with two further beams of local oscillators (LO) and measuring interference events using (photo-diode) detectors.

Each time bin may comprise a time bin length from 1 ns to 50 ns, preferably from 1 ns to 5 ns, more preferably from 1 ns to 2 ns.

The first decoder value of (at least) two first bits of the decoder initial bit sequence and/or the second decoder value of (at least) two second bits of the decoder initial bit sequence may be determined. Further, the first decoder value of (at least) three first bits of the decoder initial bit sequence and/or the second decoder value of (at least) three second bits of the decoder initial bit sequence may be determined. Moreover, the first decoder value of (at least) four first bits of the decoder initial bit sequence and/or the second decoder value of (at least) four second bits of the decoder initial bit sequence may be determined. In general, the first decoder value of at least one first bit and at most 100 first bits (in particular, at most 20 first bits; especially at most 4 first bits) of the decoder initial bit sequence and/or the second decoder value of at least one second bit and at most 100 second bits (in particular, at most 20 second bits; especially at most 4 second bits) of the decoder initial bit sequence may be determined.

Each one of the possible first encoder values may correspond to one of the ideal approximate intensity profiles. Each one of the possible second encoder values may correspond to one of the ideal approximate phase profiles. For example, in case of determining the first decoder value of a single first bit of the decoder initial bit sequence, the first decoder value may be 0 or 1. In case of determining the first decoder value of two first bits of the decoder initial bit sequence, the first decoder value may be one of 00, 01, 10, and 11. In general, in case of determining the first (second) decoder value of n first (second) bits of the decoder initial bit sequence, there are $2^n$ possibilities for the first (second) decoder value. Hence, in case of determining the first (second) decoder value of n first (second) bits of the decoder initial bit sequence, there are $2^n$ ideal approximate intensity (phase) profiles.

Comparing the approximate intensity profile with the ideal approximate intensity profiles may comprise determining a first characteristic indicative of the approximate intensity profile in relation to the ideal approximate intensity profiles. Comparing the approximate phase profile with the ideal approximate phase profiles may comprise determining a second characteristic indicative of the approximate phase profile in relation to the ideal approximate phase profiles.

The first characteristic may, e.g., comprise a first measured correlator difference determined from the approximate intensity profile and the ideal approximate intensity profiles. Determining the first decoder value may then comprise comparing the first measured correlator difference with a first threshold value. The second characteristic may comprise a second measured correlator difference determined from the approximate phase profile and the ideal approximate phase profiles. Determining the second decoder value may comprise comparing the second measured correlator difference with a second threshold value.

In other words and including variable symbols, the method may comprise at least one of:

- determining the first measured correlator difference $\Delta Q$ from the approximate intensity profile $\{\tilde{N}(t)\}_t$ and the ideal approximate intensity profiles $\{N_a(t)\}_t$ (comprising ideal intensity values $N_a(t)$) and determining the first decoder value by comparing the first measured correlator difference $\Delta Q$ with the first threshold value $\overline{\Delta Q}$ and
- determining the second measured correlator difference $\Delta R$ from the approximate phase profile $\{\tilde{\Pi}(t)\}_t$ and the ideal approximate phase profiles $\{\Pi_a(t)\}_t$ (comprising ideal phase values $\Pi_a(t)$) and determining the second decoder value by comparing the second measured correlator difference $\Delta R$ with the second threshold value $\overline{\Delta R}$.

Determining the first measured correlator difference $\Delta Q$ may comprise determining a (preferably normalized) sum of differences of ideal intensity values $N_a(t)$ dependent on the first encoder value $a$ for each of the plurality time bins, wherein each of the differences is weighted by the (measured) intensity value for the respective time bin. Determining the second measured correlator difference $\Delta R$ may comprise determining a (preferably normalized) sum of differences of ideal phase values $\Pi_a(t)$ dependent on the second encoder value $a$ for each of the plurality time bins, wherein each of the differences is weighted by the (measured) phase value for the respective time bin.

The first threshold value $\overline{\Delta Q}$ may be determined from correlator mean differences $e_0$, $e_1$ for the first decoder value of the at least one first bit, in particular from an arithmetic mean of the correlator mean differences $e_0$, $e_1$ for the first decoder value of the at least one first bit. The second threshold value $\overline{\Delta R}$ may be determined from correlator mean differences $q_0$, $q_1$ for the second decoder value of the at least one second bit, in particular from an arithmetic mean of the correlator mean differences for the second decoder value of the at least one second bit. Specifically, the first threshold value $\overline{\Delta Q}$ may be determined as $(e_0 + e_1)/2$ with $e_a = \mathbb{E}\left[Q_a^{(0)} - Q_a^{(1)}\right]$ with correlators $Q_a^{(0)}$ and $Q_a^{(1)}$ for first encoder value $a$. The second threshold value $\overline{\Delta R}$ may be determined as $(q_0 + q_1)/2$ with $f_a = \mathbb{E}\left[R_a^{(0)} - R_a^{(1)}\right]$ with correlators $R_a^{(0)}$ and $R_a^{(1)}$ for second encoder value $a$.

The first decoder value may be determined based on the first measured correlator difference $\Delta Q$ being greater or smaller than the first threshold value $\overline{\Delta Q}$. The second decoder value may be determined based on the second measured correlator difference $\Delta R$ being greater or smaller than the second threshold value $\overline{\Delta R}$.

In particular, the first decoder value may be determined based on the first measured correlator difference $\Delta Q$ being greater or smaller than the first threshold value $\overline{\Delta Q}$ by a first post-selection parameter. Based on the first measured

correlator difference $\Delta Q$ not being greater or smaller than the first threshold value $\overline{\Delta Q}$ by the first post-selection parameter, the intensity measurement of the corresponding optical pulse may be determined as inconclusive (and be discarded). The second decoder value may be determined based on the second measured correlator difference $\Delta R$ being greater or smaller than the second threshold value $\overline{\Delta R}$ by a second post-selection parameter. Based on the second measured correlator difference $\Delta R$ not being greater or smaller than the second threshold value $\overline{\Delta R}$ by the second post-selection parameter, the phase measurement of the corresponding optical pulse may be determined as inconclusive (and be discarded).

The first post-selection parameter and/or the second post-selection parameter may be determined such that a key generation rate for determining the shared key is maximized. In particular, the first post-selection parameter and/or the second post-selection parameter may be determined by numerical optimization over a set of candidate post-selection parameters and, preferably, by varying test input bit sequences for the encoder initial bit sequence and/or assumed signal leakage values.

The first post-selection parameter and/or the second post-selection parameter may be from 0.01 to 0.30, preferably from 0.05 to 0.20, more preferably from 0.08 to 0.10.

The method may comprise determining (and/or monitoring) optical signal losses along the quantum channel (and/or transmission line), in particular along the optical fiber, preferably optical signal losses depending on a position along the quantum channel. In other words, the optical signal losses may be determined as a function of the position along the quantum channel. In particular, for each position along the quantum channel, corresponding optical signal losses may be determined. The optical signal losses may thus correspond to a signal loss profile. The optical signal losses may be determined via optical test pulses (different from the plurality of optical pulses). The optical test pulses may comprise a greater optical power than the optical pulses, preferably by a factor of a least 10, more preferably by a factor of at least 100.

The optical signal losses may be determined by optical time-domain reflectometry. The optical signal losses may be determined during and/or prior to and/or subsequent to determining the shared key. The optical signal losses may be determined repeatedly. For example, the optical signal losses may be determined repeatedly within a time interval from 10 ns to 50 s, preferably from 10 ns to 10 s, in particular from one of 100 ns to 100 ms, 500 ns to 500 ms, 100 ms to 1000 ms, 0.5 s to 5 s, and 5 s to 10 s.

The method may comprise determining an intrusion event based on the optical signal losses and/or aborting (terminating) determining of the shared key based on the optical signal losses. The method may comprise discarding the shared key based on the optical signal losses.

Within the context of the present disclosure, intervals and value ranges (e.g., "from ... to ...", "between ... and ...") include their boundary points.

The aforementioned embodiments related to the methods for quantum key distribution can be provided correspondingly for the transmitter device, the receiver device, and the system for quantum key distribution.

Description of embodiments

In the following, embodiments, by way of example, are described with reference to the Figures, in which:

Fig. 1 shows a graphical representation of an arrangement of a system for quantum key distribution and an eavesdropper device,

Fig. 2 shows a graphical representation of the steps for determining a shared key by quantum key distribution,

Fig. 3 shows a reflectogram resulting from optical time-domain reflectometry corresponding to a signal loss profile,

Fig. 4 shows a graphical representation of an apparatus for preparing the optical pulses,

Fig. 5 shows a plot of an intensity profile in terms of optical power as a function of time,

Fig. 6 shows a plot of a key generation rate as a function of a portion of the intercepted signal,

Fig. 7 shows a plot of the key generation rate for phase coding and for the proposed method, and

Fig. 8 shows a plot of the key generation rate for intensity coding and for the proposed method.

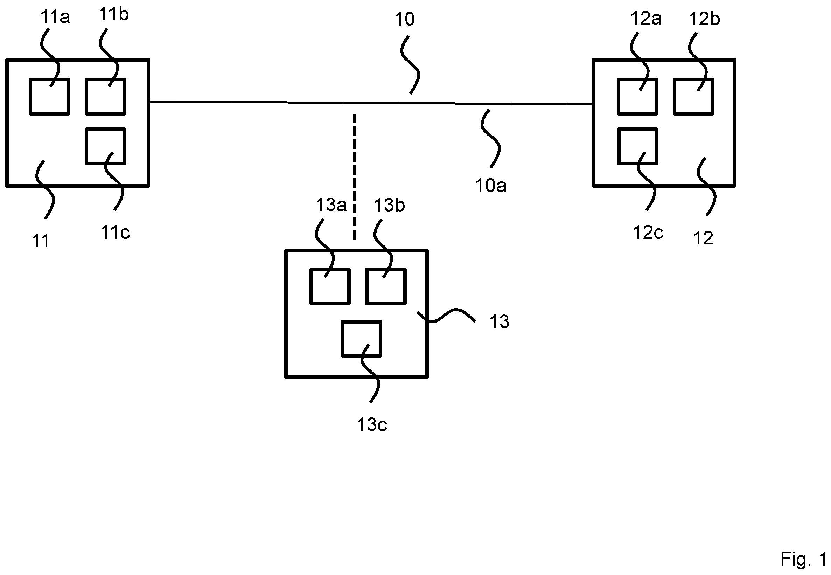

In Fig. 1, a graphical representation of an arrangement comprising a system for quantum key distribution and an eavesdropper device 13 ("Eve") is shown. The system comprises a communication channel (transmission line) 10 for transmitting classical signals and/or quantum signals, in particular optical pulses, between a transmitter device 11 ("Alice") and a receiver device 12 ("Bob"). The communication channel 10 may comprise or be a classical channel and/or a quantum channel 10a. Further, the communication channel 10 may comprise at least one optical fiber for transmitting optical pulses. At least one (optical) amplifier (not shown) may be provided along the communication channel 10 for amplifying the optical pulses. An optical amplifier may compensate for losses occurring in a preceding section of the communication channel 10.

The transmitter device 11 may comprise a (classical) processor 11a and a (classical) memory 11b and the receiver device 12 may comprise a further (classical) processor 12a and a further (classical) memory 12b. The transmitter device 11 and the receiver device 12 may be part of the system. The transmitter device 11 and the receiver device 12 are connected to the quantum channel.

The eavesdropper device 13 with an eavesdropping processor 13a and an eavesdropping memory 13b represents a device outside the system with potential access to quantum channel 10. The eavesdropper device 13 may be arranged at the transmission line 10 such that the optical signals transmitted via the transmission line 10 are at least partially received and/or retransmitted by the eavesdropper device 13. The eavesdropper device 13 may also access the further communication channels.

At least one of, preferably each of the transmitter device 11, the receiver device 12, and the eavesdropper device 13 may comprise means to at least one of prepare, transmit, receive, and measure quantum states, in particular optical quantum states. In particular, the transmitter device 11 may comprise means for preparing and transmitting quantum signals and/or quantum states, e.g., a (quantum state) preparation device 11c. Further, the receiver device 12 may comprise means for receiving and measuring quantum signals and/or quantum states, e.g., a (quantum state) measurement device 12c. The eavesdropper device 13 may likewise comprise a preparation and/or measurement device 13c. The transmitter device 11 and the receiver device 12 may each comprise means for receiving and transmitting (further) classical information (e.g., via the classical channel).

The first memory 11b, the second memory 12b, and the eavesdropping memory 13b may each comprise a quantum memory that is configured to store quantum signals and a classical memory that is configured to store classical signals. The quantum memory may be provided using optical delay lines, controlled reversible inhomogeneous broadening (CRIB), a Duan-Lukin-Cirac-Zoller (DLCZ) scheme, revival of silenced echo (ROSE), and/or hybrid photon echo rephasing (HYPER).

## (a) Quantum key distribution

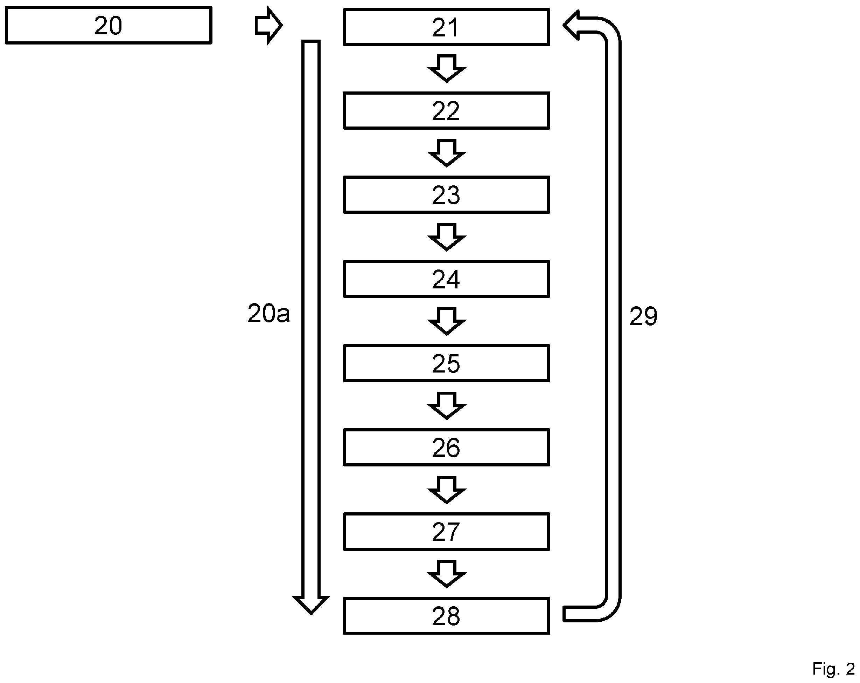

In the following, the steps for determining a shared key by quantum key distribution will be briefly described. In Fig. 2, a graphical representation of the corresponding steps is shown.

Certain steps will be explained in more detail in the subsequent sections, in particular, loss control of the transmission line (transmission line control) (step 21, section b), encoding (step 23, section c), decoding (step 25, section d), and post-processing (steps 26 to 28, section e).

The transmitter device 11 and the receiver device 12 are connected via an authenticated (public) classical channel and the optical fiber(s) of the transmission line 10 serve as a quantum channel 10a.

In an initial step 20, an initial inner loss profile of the transmission line 10 (in particular its optical fiber segments) is determined, which essentially represents the natural signal losses in the transmission line 10. At this preliminary step, it should be ensured that no eavesdropper is accessing the transmission line 10. The initial loss profile may be shared between the transmitter device 11 and the receiver device 12 via the authenticated classical communication channel.

In a first step 21, physical loss control of the transmission line 10 is carried out by the transmitter device 11 and the receiver device 12 by transmitting optical test pulses. In particular, a loss profile is determined and, preferably, shared between the transmitter device 11 and the receiver device 12 via the classical channel.

By comparing the thus updated inner loss profile with the initial inner loss profile, a fraction $r_E$ of the signal possibly seized by the eavesdropper may be determined. For example, if, in a section of the transmission line 10, the natural signal losses in this section are represented by $r_0$ and the eavesdropper intercepts an intercepted fraction $r_E$ of the signal, then the intercepted fraction $r_E$ can be derived from total losses $r_t$ via the relation $(1 - r_t) = (1 - r_E)(1 - r_0)$.

If the intercepted fraction $r_E$ grows too large, so that the legitimate users lose their informational advantage over the eavesdropper, the protocol is terminated. Termination of the protocol depends on the length of the transmission line 10. The protocol may in particular be terminated if an effective key rate is below a target key rate value.

Based on the loss profile, protocol settings such as signal shapes, post-selection parameters, error-correction codes may be determined. Physical loss control including transmission of optical test pulses may be carried out in parallel with the transmission of the optical (signal) pulses for determining the shared key. If a change in $r_E$ is detected, the protocol settings may be adapted.

In a second step 22, using a random number generator, a bit sequence is determined in the transmitter device 11.

In a third step 23, the encoder initial bit sequence is encoded into the respective intensity profiles and/or phase profiles of a plurality of optical (signal) pulses.

In a fourth step 24, the optical pulses are transmitted to the receiver device 12 via the quantum channel 10a.

In a fifth step 25, the optical pulses are received and measured by the receiver device 12. A corresponding decoder initial bit sequence is determined in the receiver device 12. Due to quantum and classical noise, quantum states of certain optical pulses corresponding to different bit values cannot be determined accurately. Thus, the second initial bit string may contain additional errors.

In a sixth step 26, inconclusive bits, which correspond to quantum measurements in the receiver device 12 determined as inconclusive, are discarded from the encoder initial bit sequence in the transmitter device 11 and the decoder initial bit sequence in the receiver device 12 (post-selection). This results in a first raw key in the transmitter device and a second raw key in the receiver device. In order to discard the inconclusive bits, bit positions of the inconclusive signal bits (as part of the further classical information) may be transmitted via the classical channel from the receiver device 12 to the transmitter device 11.

In a seventh step 27, by disclosing a part of the encoder initial bit sequence (in particular, the first/encoder raw key) and/or the decoder initial bit sequence (in particular, the second/decoder raw key) via the classical channel (as part of the classical information and/or the further classical information), an error rate may be determined and error correction may be performed on the first raw key and the second raw key by the transmitter device 11 and the receiver device 12, respectively. The error correction maybe carried out employing an error correction code, e.g., a low-density parity-check (LDPC) code, a Hamming code, or a cascade protocol. As a result, an error corrected bit sequence is determined in the transmitter device 11 from the first raw key and in the receiver device 12 from the from the second raw key.

In an eighth step 28, an amplified key sequence is determined from the error corrected bit sequence using privacy amplification. Known privacy amplification methods may be employed during which (further) classical information is exchanged. The amplified key sequence is shorter than the error corrected bit sequence and any potential eavesdropper has none or negligibly small information on the amplified key sequence. The amplified key sequence represents a shared key sequence between the transmitter device 11 and the receiver device 12 as a result of quantum key distribution. The privacy amplification may be based on the determined value of $r_E$.

The steps from the first step 21 to the eighth step 28 may be repeated (arrow 29) and the amplified key sequences concatenated to a (total) shared key until a total length of the shared key is as large as required by the application at hand.

During all steps 21 to 28, the transmission line 10 may be continuously controlled (arrow 20a). Hence, a signal loss profile is determined and, preferably, shared between the transmitter device 11 and the receiver device 12 via the classical channel. In case where the integrity of the transmission line 10 is compromised to the extent of a considerable risk that the eavesdropper would decipher the scattering losses, the protocol may be terminated.

(b) <u>Transmission line control / loss control</u>

In the following, the first step 21 of physical loss control of the transmission line 10 will be explained in more detail.

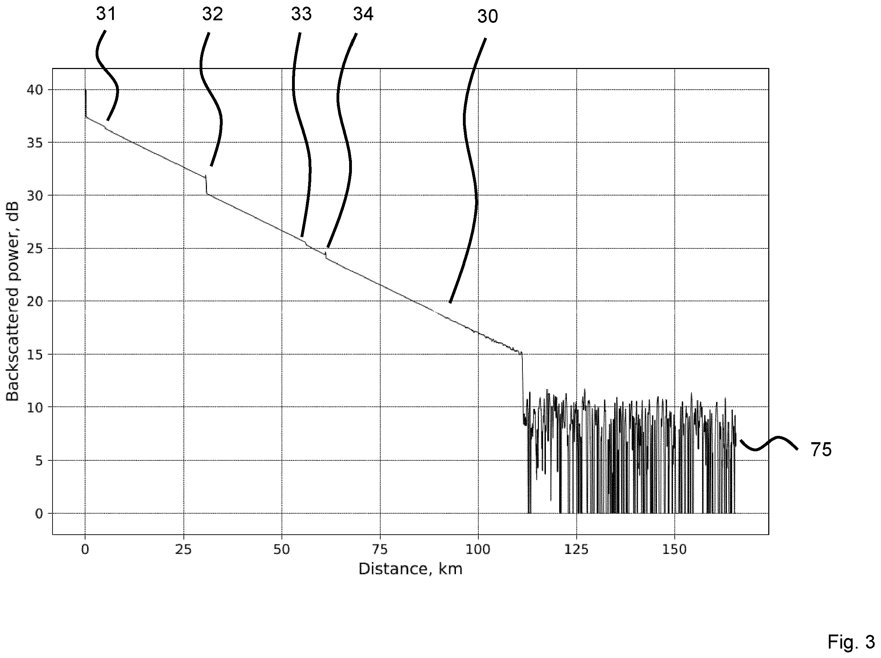

Fig. 3 shows an exemplary reflectogram resulting from optical time-domain reflectometry corresponding to a signal loss profile. The underlying measurements were carried out with a 2 µs, 1550 nm pulse laser with power less than 100 mW. The experimental data has been averaged over 16 000 measurements.

The reflectogram shows the logarithmic power of backscattered optical test pulses as a function of distance between a reflectometer and the corresponding discontinuity. The reflectometer may be arranged within or close to the transmitter device 11 and/or the receiver device 12.

The natural signal losses along the quantum channel 10a / the transmission line 10 are due to homogenous scattering and result in an exponential decay of power corresponding to linear regions 30. Reflectogram features 31 to 34 comprising deviations from the exponential decay of the reflectogram curve, in particular sharp peaks and/or drops in the reflectogram curve allow for classifying the signal losses at the corresponding position of the transmission line 10. This is especially useful at the initial step 20, where identifying and mitigating local losses is important for comparison with determined losses during key exchange.

The reflectogram features 31 to 34 generally correspond to imperfections of the transmission line 10 and may, e.g., represent low-quality splices, bends and different connectors. Scattering losses from such regions are localized with respect to the transmission line 10. Peaks in the reflectogram features 31 to 34 may result from an excessive scattering which in the case of physical connectors are due to the test pulses undergoing Fresnel reflection. Noisy region 35 at the right-hand side of the reflectogram represents the end of the backscattered signal.

Additionally or alternatively, the transmission line control may comprise *transmittometry,* i.e., intensities of the optical test pulses transmitted by the transmitter device 11 and received by the receiver device 12 are analyzed for classifying the signal losses at respective positions of the transmission line 10. Classification by analyzing received optical signals in the receiver device 12 may also be carried out in the receiver device 12. The transmitter device 11 may also be configured to carry out classification, in particular by combining measurements of backscattered test pulse components and of optical test pulses received in the receiver device 12.

For increased precision, optical test pulses with highest intensity, in particular with intensity greater than the intensity of the optical (signal) pulses. Parameters of the transmitted optical test pulses, such as intensity, phase, length, and shape, are determined randomly in the transmitter device 11. The parameters remain secret until the quantum measurements are completed by the receiver device 12. Next, the transmitter device 11 announces the employed parameters and the transmitter device 11 and the receiver device 12 perform a cross-check of the parameters and determine the losses in the transmission line 10. The time intervals between the optical test pulses transmission may be determined according to a pre-shared secret bit sequence. This ensures that a potential eavesdropper cannot discern optical test pulses from optical (signal) pulses. As a result, it is impossible for the eavesdropper to create an additional permanent leakage constant or a leakage targeting for certain optical signal pulses and optical test pulses. By analyzing the optical test pulses, the eavesdropper's knowledge about the optical signal pulses can be assessed.

(c) Encoding

Below, the third step 23 of encoding the encoder initial bit sequence into the respective intensity profiles and/or phase profiles of the plurality of optical (signal) pulses will be described in more detail.

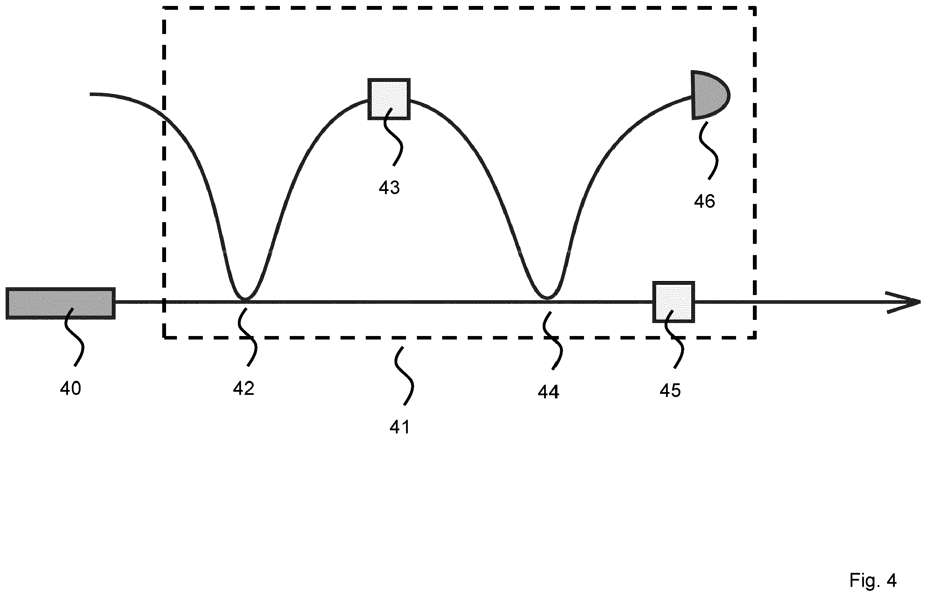

In Fig. 4, a graphical representation of an apparatus for preparing the optical pulses is shown. The apparatus may correspond to the preparation device 11c of the transmitter device 11.

Each optical pulse is generated from a laser pulse of a laser 40 and using a Mach-Zehnder (MZ) interferometer 41. The laser pulse (as generated by the laser 40) has a time length $T_s$ and a constant input optical power $P_\gamma = \hbar\Omega|\gamma|^2$, wherein $\Omega$ is a carrier frequency and $\gamma$ a (complex) pulse amplitude.

The MZ interferometer 41 may comprise a first phase modulator 43, a second phase modulator 45, a first beam splitter 42, and a second beam splitter 44. The laser pulse may pass through the first beam splitter 42, the first phase modulator 43, the second beam splitter 44, and the second phase modulator 45.

The first beam splitter 42 and the second beam splitter 44 are 50:50 beam splitters. The laser pulse is split at the first beam splitter 42 into a first part and a second part and recombined at the second beam splitter 44. The laser pulse is again split at the second beam splitter 44 into a third part and a fourth part. The first part passes the first phase modulator 43. The second part passes directly to the second beam splitter 44. The third part is transmitted to a control detector 46. The fourth part passes the second phase modulator 45 and is subsequently transmitted to the quantum channel 10a (as one optical pulse of the plurality of optical pulses). By detector 46, the proper preparation of the optical pulses can be monitored.

The parameters of both phase modulators 43, 45 may be controlled in time for modulating the intensity profile and/or phase profile of the optical pulses.

The transformation of an input state $(0, \gamma)^T$ (vacuum on one port and pulse with complex amplitude $\gamma$ on another) via the MZ interferometer 41 can be represented by

$$\widehat{U}_{MZ} = \widehat{U}_\psi \cdot \widehat{U}_{BS2} \cdot \widehat{U}_\varphi \cdot \widehat{U}_{BS1}, \tag{1}$$

with

$$\widehat{U}_{BS(1,2)} = \frac{1}{\sqrt{2}}\begin{pmatrix} 1 & i \\ i & 1 \end{pmatrix}, \ \widehat{U}_\varphi = \begin{pmatrix} e^{i\varphi} & 0 \\ 0 & 1 \end{pmatrix}, \ \widehat{U}_\psi = \begin{pmatrix} 1 & 0 \\ 0 & e^{i\psi} \end{pmatrix}. \tag{2}$$

$\hat{U}_{BS(1,2)}$ denotes the transformation corresponding to the first and the second beam splitter 42, 44. Further, $\hat{U}_\varphi$ denotes the transformation corresponding to a first phase shift $\varphi$ via the first phase modulator 43 and $\hat{U}_\psi$ denotes the transformation corresponding to a second phase shift $\psi$ via the second phase modulator 45. The first phase shift $\varphi(t)$ and the second phase shift $\psi(t)$ are time-dependent functions and determine the intensity profile profiles and the phase profile of the output optical pulse, respectively. The optical pulse is represented by the following quantum state:

$$\widehat{U}_{MZ}\begin{pmatrix} 0 \\ \gamma \end{pmatrix} = \begin{pmatrix} \gamma i e^{i\varphi/2} \cdot \cos\dfrac{\varphi}{2} \\ \gamma e^{i\psi + i\varphi/2 + i\pi} \cdot \sin\dfrac{\varphi}{2} \end{pmatrix} \tag{3}$$

The intensity profile $P_{\text{line}}(t)$ (in terms of optical power) and the phase profile $\phi_{\text{line}}(t)$ can be represented as follows:

$$P_{\text{line}}(t) = P_\gamma \cdot \sin^2\left(\frac{\varphi(t)}{2}\right) = \frac{P_\gamma}{2} \cdot (1 - \cos\varphi(t)),$$

$$\phi_{\text{line}}(t) = \psi(t) + \frac{\varphi(t)}{2} + \pi \quad \Rightarrow \quad \psi(t) = \phi_{\text{line}}(t) - \frac{\varphi(t)}{2} - \pi. \tag{4}$$

$P_\gamma$ denotes the (constant) input optical power from the laser 40. For an intensity profile $P_{\text{line}}(t) = \hbar\Omega|F(t)|^2$ (in terms of optical power) with intensity profile $|F(t)|^2$ in terms of intensity, the corresponding first phase shift $\varphi(t)$ may be determined as

$$\varphi(t) = \arccos\left[1 - \frac{2\hbar\Omega|F(t)|^2}{P_\gamma}\right] \tag{5}$$

by using that

$$\hbar\Omega|F(t)|^2 = \frac{P_\gamma}{2} \cdot \left(1 - \cos\varphi(t)\right). \tag{6}$$

Since $|\cos(\varphi(t))| \leq 1$, for the input optical power $P_\gamma$ applies: $P_\gamma \geq \hbar\Omega|F(t)|^2$. The input optical power $P_\gamma$ is thus greater than the intensity profile (in power terms) for each time $t$.

The first phase shift $\varphi(t)$ may be compensated and a desirable phase profile $\phi_{\text{line}}(t)$ be prepared by controlling the second phase shift $\psi(t)$.

In a particular example, the classical (first) bits of the encoder initial bit sequence are encoded only in the intensity profiles. In this case, the phase profile can be time-dependent for each optical pulse but be the same for each first encoder value (i.e., be independent from the first encoder value). Moreover, a single first bit is encoded per optical pulse. Hence, for each optical pulse, the intensity function depends on a first encoder value of a (single) first bit of the encoder initial bit sequence).

The intensity profile in terms of optical power for a first (bit) value $a$ can be written as:

$$P_a(t) = P' + P'' \cdot \cos\left(\zeta_a(t)\right), \; a \in \{0,1\}, \tag{7}$$

where $\zeta_a(t)$ is a time-dependent function and depending on / determined by $a$, $P'$ is constant (optical power) component and $P''$ is an amplitude of a modulation component, here: an oscillatory component. The function $P' + P'' \cdot \cos(\zeta_a(t))$ may be considered (up to a constant factor) to be the intensity function according to which the intensity profile is modulated. By combining Eq. (4) und Eq. (7), i.e.,

$$\frac{P_\gamma}{2} \cdot (1 - \cos\varphi) = P' + P'' \cdot \cos\left(\zeta_a(t)\right), \tag{8}$$

the employed first phase shift $\varphi(t)$ (depending on the first encoder value $a$) may be determined as:

$$\varphi_a(t) = \arccos\left[1 - 2 \cdot \frac{P' + P'' \cdot \cos\left(\zeta_a(t)\right)}{P_\gamma}\right], \tag{9}$$

where $P_\gamma \geq P' + P''$ (since $|\cos(\varphi_a(t))| \leq 1$).

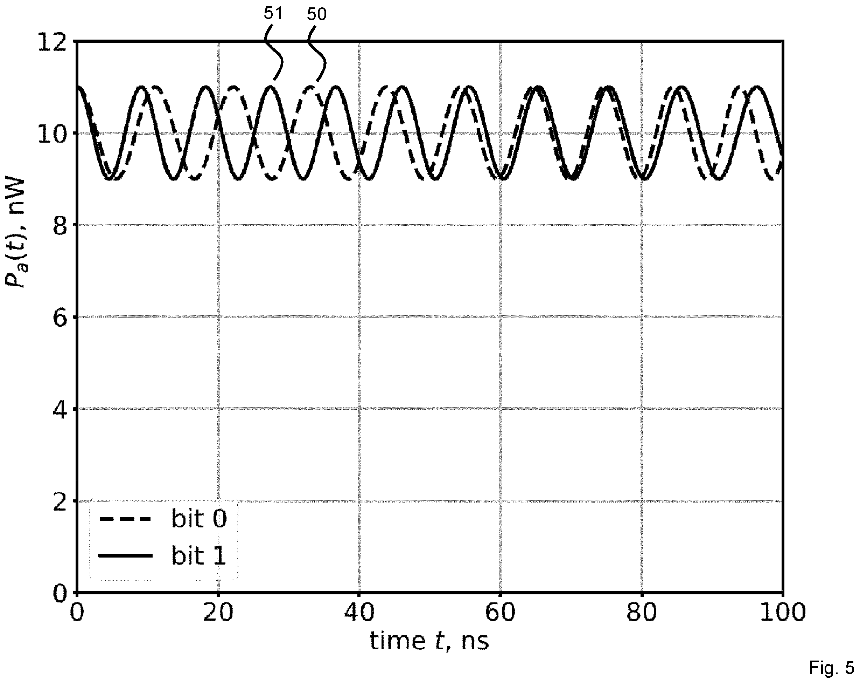

In Fig. 5, a plot of the intensity profile in terms of optical power as a function of time is shown. The intensity profile for the first encoder value being equal to zero (a = 0) corresponds to a first time-dependent curve 50 and the intensity profile for the first encoder value being equal to one (a = 1) corresponds to a second time-dependent curve 51.

For a = 0, the intensity profile can be represented by

$$P_0(t) = P' + P'' \cdot \cos\left(\frac{2\pi(f_1 - f_0)}{3T_s^2} \cdot t^3 + 2\pi f_0 \cdot t\right), \tag{10}$$

and for a = 1 by

$$\tag{11}$$

$$P_1(t) = P' + P'' \cdot \cos\left(\frac{2\pi(f_0 - f_1)}{3T_s^2} \cdot t^3 + 2\pi f_1 \cdot t\right),$$

wherein $P' = 10^{-8}$ W, $P'' = 10^{-9}$ W, $T_s = 100$ ns, $f_0 = 90$ MHz, and $f_1 = 110$ MHz. As can be seen from curves 50, 51, for a = 0, the instantaneous frequency increases with time, while for a = 1, the instantaneous frequency decreases with time. The factors

$\frac{2\pi(f_1-f_0)}{3T_s^2}$ and $\frac{2\pi(f_0-f_1)}{3T_s^2}$ may be understood as a first chirp rate and a second chirp rate, respectively.

(d) Measuring and decoding

In the following, the measuring and decoding of optical pulses received in the receiver device 12 (step 25) is described in more detail.

From the optical pulses, a decoder initial bit sequence is determined in the receiver device 12. To this end, an approximate intensity profile of each optical pulse is determined by measuring intensity values of the optical pulse for a plurality of time bins. Using the approximate intensity profile, (first decoder) values of the decoder initial bit sequence can be determined. Further, an approximate phase profile of the optical pulse is determined by measuring phase values of the optical pulse for a plurality of time bins. From the approximate phase profile, further (second decoder) values of the decoder initial bit sequence can be determined.

Measuring the intensity values and/or the phase values may comprise carrying out heterodyne measurements for each time bin. The heterodyne measurements include splitting a received optical pulse into two beams which interfere with two further beams of local oscillators (LO) and measuring interference events using photo-diode detectors.

For matching a local oscillator phase with a phase of the laser (using which the optical pulses have been generated), unmodulated optical pulses (of constant intensity and phase) may be transmitted from the laser via an additional quantum channel (in parallel to the (modulated) optical pulses).

In the following example, an approximate intensity profile is determined without determining an approximate phase profile. Hence, the phases of the optical pulses can remain constant in time. Thus, there is no phase difference between different optical pulses and in-between one optical pulse. The intensity profile of each optical pulse of the plurality of optical pulses has been modulated in the transmitter device 11 according to an intensity function depending on time and on the first encoder value of one first bit of the encoder initial bit sequence. Further, the plurality of optical pulses has been transmitted via the quantum channel 10a and been received in the receiver device 12.

In the receiver device 12, a plurality of quantum measurements is carried out, such that a plurality of (average) photon numbers is determined for a plurality of time bins characterized by a time interval $\Delta t$. Once per time interval $\Delta t$, an intensity value (i.e., a number of photons received during the time interval $\Delta t$) is determined. Thus, a discrete set of time values and corresponding photon numbers is determined (approximate/discretized intensity profile). From the approximate intensity profile, the intensity profile as initially generated in the transmitter device 11 can be reconstructed with a certain accuracy and, thus, the corresponding bit value be estimated.

The intensity profiles may be generated such that their total energies remain constant for each of the plurality of optical pulses and for each possible bit value. That is, the total number of photons of each optical pulse is constant:

$$\sum_t N_0(t) = \sum_t N_1(t), \tag{12}$$

where $N_a(t)$ denotes the average number of photons of an optical pulse in the time interval $[t, t+\Delta t]$ in case of the first (bit) value being $a$. Due to Poisson noise, the determined approximate intensity profiles will in general not coincide with the ideal ones. The measured number of photons in the time interval $[t, t+\Delta t]$ for bit value $a$ can be represented by

$$\tilde{N}_a(t) = N_a(t) + n_a(t), \tag{13}$$

where $n_a(t)$ is random variable associated with noise. For high signal intensities, $n_a(t)$ may be treated as a Gaussian random variable at every time $t$. According to the bosonic model of optical amplifiers, the resulting mean value and variance can be written as:

$$\forall t \quad \mathbb{E}\left[\tilde{N}_a(t)\right] = N_a(t) + \frac{\Delta t}{T_s} \cdot M(G-1),$$

$$\mathbb{D}\left[\tilde{N}_a(t)\right] = (2M(G-1)+1) \cdot N_a(t) + M(G-1) \cdot (M(G-1)+1) \cdot \frac{\Delta t}{T_s}, \tag{14}$$

where $M$ is a number of optical amplifiers along the quantum channel 10a, $G$ is an amplification factor of one optical amplifier. Thus, $M = D_{AB}/d$ and $G = 1/T$, where $D_{AB}$ is the distance between the transmitter device 11 and the receiver device 12, $d$ is the distance between neighboring optical amplifiers and $T = 10^{-0.02 \cdot d}$ is an attenuation parameter of an optical fiber. The number of photons and the optical power $P_a(t)$ at time $t$ with the time discretization $\Delta t$ are related as follows:

$$N_a(t) = \frac{\Delta t}{\hbar\Omega} \cdot P_a(t), \tag{15}$$

wherein $\hbar\Omega$ is the energy of one photon. In order to determine the (first decoder) value of one (first) bit of the decoder initial bit sequence in the receiver device 12, a first measured correlator difference $\Delta Q$ from the approximate intensity profile $\{\tilde{N}(t)\}_t$ and ideal approximate intensity profiles $\{N_0(t)\}_t$ and $\{N_1(t)\}_t$ for first encoder value 0 and 1, respectively, is determined.

For establishing the procedure to determine first decoder value $a$, the statistical properties of correlators $Q_a^{(0)}, Q_a^{(1)}$ between ideal approximate intensity profiles and noisy approximate intensity profiles are analyzed in the following. The correlators $Q_a^{(0)}, Q_a^{(1)}$ are defined as:

$$Q_a^{(0)} = \frac{\sum_t N_0(t) \cdot \tilde{N}_a(t)}{\sum_t N_0(t)N_1(t)}, \quad Q_a^{(1)} = \frac{\sum_t N_1(t) \cdot \tilde{N}_a(t)}{\sum_t N_0(t)N_1(t)}, \tag{16}$$

wherein $\Sigma_t N_0(t)N_1(t)$ is a normalization factor. The correlators may be treated as Gaussian random variables, since they can be represented as weighted sums of Gaussian variables. Hence, the difference between $Q_a^{(0)}$ and $Q_a^{(1)}$ (correlator difference for value $a$),

$$\Delta Q_a = Q_a^{(0)} - Q_a^{(1)} = \frac{\sum_t \left(N_0(t) - N_1(t)\right) \cdot \tilde{N}_a(t)}{\sum_t N_0(t)N_1(t)}, \tag{17}$$

can be assumed to be normally distributed as well. Considering the relation between optical power and photon number according to Eq. (15), the mean value of the correlator difference $\Delta Q_a$ (correlator mean difference $e_a$) is

$$e_a = \mathbb{E}[\Delta Q_a] = \frac{\sum_t \left(N_0(t) - N_1(t)\right) \cdot \mathbb{E}\left[\tilde{N}_a(t)\right]}{\sum_t N_0(t)N_1(t)} = \frac{\sum_t \left(N_0(t) - N_1(t)\right) \cdot \left(N_a(t) + \frac{\Delta t}{T_s} M(G-1)\right)}{\sum_t N_0(t)N_1(t)}$$
$$= \frac{\sum_t \left(P_0(t) - P_1(t)\right) \cdot \left(P_a(t) + \frac{\hbar\Omega}{T_s} M(G-1)\right)}{\sum_t P_0(t)P_1(t)} = \frac{\sum_t \left(P_0(t) - P_1(t)\right) \cdot P_a(t)}{\sum_t P_0(t)P_1(t)}. \tag{18}$$

The correlator mean difference $e_a$ can thus be explicitly represented as a sum of Gaussian random variables. Hence, using Eq. (15), the variance of the correlator difference $\Delta Q_a$ is also a weighted sum of variances:

$$\sigma_a^2 = \mathbb{D}[\Delta Q_a] = \frac{\sum_t \left(N_0(t) - N_1(t)\right)^2 \cdot \mathbb{D}\left[\tilde{N}_a(t)\right]}{\left(\sum_t N_0(t)N_1(t)\right)^2}$$
$$= \frac{\sum_t \left(N_0(t) - N_1(t)\right)^2 \cdot \left((2M(G-1)+1) \cdot N_a(t) + M(G-1) \cdot (M(G-1)+1) \cdot \frac{\Delta t}{T_s}\right)}{\left(\sum_t N_0(t)N_1(t)\right)^2}$$
$$= \left(\frac{\hbar\Omega}{\Delta t}\right) \cdot \frac{\sum_t \left(P_0(t) - P_1(t)\right)^2 \cdot \left((2M(G-1)+1) \cdot P_a(t) + M(G-1) \cdot (M(G-1)+1) \cdot \frac{\hbar\Omega}{T_s}\right)}{\left(\sum_t P_0(t)P_1(t)\right)^2}. \tag{19}$$

In summary, the correlator difference $\Delta Q_a$ can be treated as a normally distributed random variable with mean value $e_a$ (Eq. (18)) and variance $\sigma_a^2$ (Eq. (19)). Thus, the probability of a measurement result for the correlator difference $\Delta Q$ under the condition, that sent bit has first encoder value $a$, is as follows:

$$p(\Delta Q|a) = \frac{1}{\sqrt{2\pi\sigma_a^2}} \cdot \exp\left(-\frac{(\Delta Q - e_a)^2}{2\sigma_a^2}\right) \tag{20}$$

According to Bayes' rule, the probability that the sent bit had first encoder value $a$ - under the condition that the measured correlator difference has value $\Delta Q$ - can be written as

$$p(a|\Delta Q) = \frac{p(\Delta Q|a)}{p(\Delta Q|0) + p(\Delta Q|1)} = \frac{\frac{1}{\sigma_a} \cdot \exp(-(\Delta Q - e_a)^2/2\sigma_a^2)}{\frac{1}{\sigma_0} \cdot \exp(-(\Delta Q - e_0)^2/2\sigma_0^2) + \frac{1}{\sigma_1} \cdot \exp(-(\Delta Q - e_1)^2/2\sigma_1^2)}. \tag{21}$$

For further post-selection and error correction procedures, a (first) threshold value $\overline{\Delta Q}$ is determined so that $p(0|\overline{\Delta Q}) = p(1|\overline{\Delta Q})$. In other words, both bit values are equiprobable if $\overline{\Delta Q}$ is measured, i.e.:

$$\frac{1}{\sigma_0} \cdot \exp\left(-\left(\overline{\Delta Q} - e_0\right)^2/2\sigma_0^2\right) = \frac{1}{\sigma_1} \cdot \exp\left(-\left(\overline{\Delta Q} - e_1\right)^2/2\sigma_1^2\right). \tag{22}$$

To provide an estimate of $\overline{\Delta Q}$, it can be assumed that $\sigma_0^2 \approx \sigma_1^2$. Hence,

$$\left(\overline{\Delta Q} - e_0\right)^2 \approx \left(\overline{\Delta Q} - e_1\right)^2 \quad \Rightarrow \quad \overline{\Delta Q} \approx \frac{(e_0 + e_1)}{2}. \tag{23}$$

For a determined threshold value $\overline{\Delta Q}$, it may be decided on the first decoder value of the first bit (the reconstruction in the receiver device 12 of the first encoder value of the first bit from the transmitter device 11) as follows.

From the approximate intensity profile $\{\tilde{N}(t)\}_t$, i.e., from the measured intensity values $\tilde{N}(t)$, the (first) measured correlator difference $\Delta Q$ (which can be expressed as the difference from the correlators $Q^{(0)}$ and $Q^{(1)}$) is determined by:

$$\Delta Q = Q^{(0)} - Q^{(1)} = \frac{\sum_t N_0(t)\,\tilde{N}(t)}{\sum_t N_0(t)N_1(t)} - \frac{\sum_t N_1(t)\,\tilde{N}(t)}{\sum_t N_0(t)N_1(t)} = \frac{\sum_t \left(N_0(t) - N_1(t)\right) \cdot \tilde{N}(t)}{\sum_t N_0(t)N_1(t)} \tag{24}$$

In case the measured correlator difference $\Delta Q$ is greater than the threshold value $\overline{\Delta Q}$, i.e., $\Delta Q > \overline{\Delta Q}$, it is decided that the first encoder value of the first bit (generated in the transmitter device 11) had been 0 and the first decoder value of the first bit is determined in the receiver device 12 as 0. In case $\Delta Q < \overline{\Delta Q}$, the first decoder value of the first bit is determined in the receiver device 12 as 1. In summary:

$$\Delta Q > \overline{\Delta Q} \rightarrow \text{bit value } 0, \quad \Delta Q < \overline{\Delta Q} \rightarrow \text{bit value } 1. \tag{25}$$

In another example, in case an approximate phase profile $\{\tilde{\Pi}(t)\}_t$ is determined, a second measured correlator difference $\Delta R = R^{(0)} - R^{(1)}$ can analogously be determined from measured phase values $\tilde{\Pi}(t)$ by

$$\tag{26}$$

$$\Delta R = \frac{\sum_t \left(\Pi_0(t) - \Pi_1(t)\right) \cdot \tilde{\Pi}(t)}{\sum_t \Pi_0(t)\Pi_1(t)}$$

and be compared with a second threshold value $\overline{\Delta R}$ in order to determine the second decoder value of the second bit (as a reconstruction in the receiver device 12 of the second encoder value of the second bit from the transmitter device 11).

(e) Classical post-processing and key generation rate

In this section, certain aspects of the classical post-processing steps (including post-selection, error correction and privacy amplification - steps 26 to 28) carried out in the transmitter device 11 and/or the receiver device 12 will be described in more detail. During these steps, (further) classical information is exchanged between the transmitter device 11 and the receiver device 12.

At the post-selection stage (step 26), measurement results which do not lead to an information advantage with respect to the eavesdropping device 13 are discarded by the receiver device 12.

In particular, measurement results and/or value allocations of the at least one first (second bit) of the decoder initial bit sequence may be discarded based on the first (second) measured correlator difference $\Delta Q$ ($\Delta R$) being greater or smaller than the first (second) threshold value $\overline{\Delta Q}$ ($\overline{\Delta R}$) by a first (second) post-selection parameter $\theta$ ($\tilde{\theta}$).

In case of a single first bit of the decoder initial bit sequence, allocating the first decoder value may thus be carried out as follows:

$$\Delta Q > \overline{\Delta Q} + \theta \to \text{bit } 0, \Delta Q < \overline{\Delta Q} - \theta \to \text{bit } 1, \overline{\Delta Q} - \theta \le \Delta Q \le \overline{\Delta Q} + \theta \to \text{discard}.$$

The four value may be allocated analogously. The first (second) post-selection parameter $\theta$ ($\tilde{\theta}$) may be a non-negative value, and is preferably determined such that a resulting key generation rate is maximized.

The normalized key generation rate after error correction and privacy amplification may be expressed as

$$(27)$$

$$\frac{L_f}{L} = p(\checkmark) \cdot \big( \mathrm{I}(A\colon B) - \mathrm{I}(A\colon E) \big),$$

wherein $L$ is the length of the encoder initial bit sequence generated in the transmitter device 11. The expression in Eq. (27) and its constituting terms will be derived in the following subsection.

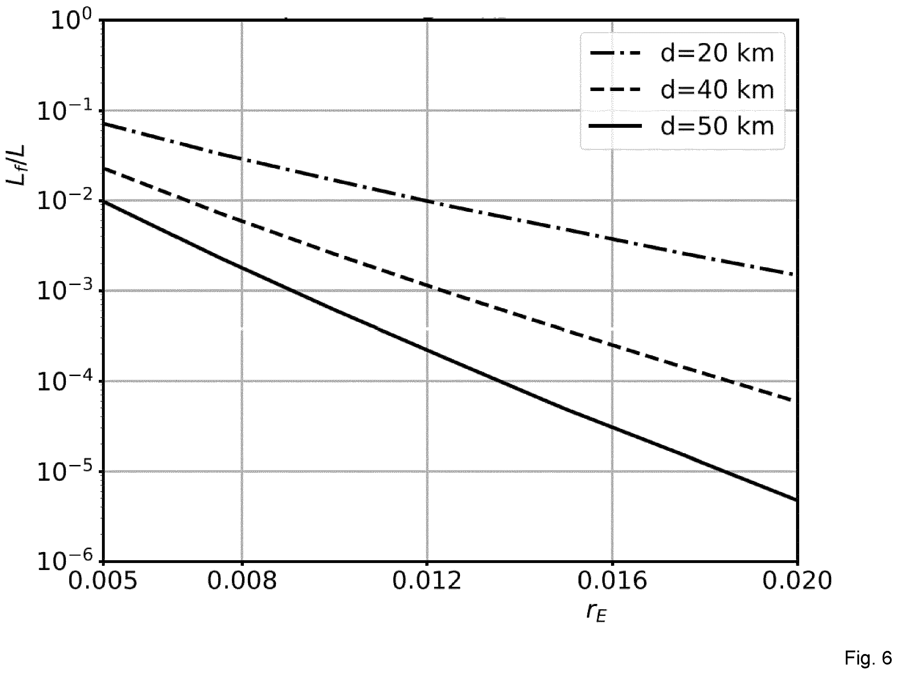

Fig. 6 shows a plot of the normalized key generation rate $L_f/L$ as a function of the portion of the intercepted signal $r_E$ (signal leakage value) for different distances $d$ between neighboring optical amplifiers when employing the intensity profiles according to Eq. (10) and Eq. (11), i.e.,

$$P_0(t) = P' + P'' \cdot \cos\left(\frac{2\pi(f_1 - f_0)}{3T_s^2} \cdot t^3 + 2\pi f_0 \cdot t\right), \quad P_1(t) = P' + P'' \cdot \cos\left(\frac{2\pi(f_0 - f_1)}{3T_s^2} \cdot t^3 + 2\pi f_1 \cdot t\right), P'$$

= $10^{-8}$ W, $P''$ = $10^{-9}$ W, $T_s$ = 100 ns, $f_0$ = 90 MHz, and $f_1$ = 110 MHz. The distance between the transmitter device 11 and the receiver device 12 is $D_{AB}$ = 1000 km.

The key generation rate is obtained by numerical optimization over the post-selection parameter $\theta$. For the considered signal leakage values $r_E$, the optimal post-selection parameter $\theta$ lies in the interval [0.08; 0.1]. These values are of the order of the difference between the correlator mean differences $|e_1 - e_0|$.

*Derivation of the key generation rate*

For the mutual information I($A$: $B$) between the transmitter device 11 and the receiver device 12, the conditional probabilities $p(0|a)$, $p(1|a)$ of obtaining bit value $b \in \{0,1\}$ in case of bit $a$ is sent are determined as follows:

$$p(0|a) = p\big(\Delta Q > \overline{\Delta Q} + \theta | a\big) = \int_{\overline{\Delta Q} + \theta}^{+\infty} \frac{1}{\sqrt{2\pi\sigma_a^2}} \cdot \exp\left(-\frac{(\Delta Q - e_a)^2}{2\sigma_a^2}\right) d(\Delta Q) =$$

$$= \frac{1}{\sqrt{\pi}} \cdot \int_{\frac{\overline{\Delta Q} + \theta - e_a}{\sqrt{2\sigma_a^2}}}^{+\infty} \exp\left(-x^2\right) dx = \frac{1}{2} \cdot \mathrm{erfc}\left(\frac{\theta + \overline{\Delta Q} - e_a}{\sqrt{2\sigma_a^2}}\right)$$

$$(28)$$

and

$$p(1|a) = p\big(\Delta Q < \overline{\Delta Q} - \theta | a\big) = \frac{1}{2} \cdot \mathrm{erfc}\left(\frac{\theta - \overline{\Delta Q} + e_a}{\sqrt{2\sigma_a^2}}\right).$$

$$(29)$$

Eq. (28) and Eq. (29) can be combined as

$$p(b|a) = \frac{1}{2} \cdot \text{erfc}\left(\frac{\theta + (-1)^b \cdot \left(\overline{\Delta Q} - e_a\right)}{\sqrt{2\sigma_a^2}}\right). \tag{30}$$

Hence, the mutual information I($A$: $B$) between the transmitter device 11 and the receiver device 12 is:

$$I(A:B) = H(A) + H(B) - H(AB)$$

$$= h_2\left(\sum_{b=0,1} \frac{p(b|0)}{p(\checkmark)}\right) + h_2\left(\sum_{a=0,1} \frac{p(0|a)}{2p(\checkmark)}\right) + \sum_{a=0,1}\sum_{b=0,1} \frac{p(b|a)}{2p(\checkmark)} \cdot \log_2\left(\frac{p(b|a)}{2p(\checkmark)}\right), \tag{31}$$

and the probability for a conclusive result $p(\checkmark)$ is:

$$p(\checkmark) = \frac{1}{2}\sum_{a=0,1}\sum_{b=0,1} p\,(b|a), \tag{32}$$

where $H(X)$ is the Shannon entropy of a system $X$, $h_2(x) = -x \cdot \log_2(x) - (1 - x) \cdot \log_2(1 - x)$ is the binary entropy function.
LDPC codes provide a more efficient error correction if the error probability for each bit is estimated independently instead of a collective estimation of an average error. In such a case, the mutual information I($A$: $B$) between the transmitter device 11 and the receiver device 12 according to Eq. (31) becomes:

$$I(A:B) = 1 - \int_{-\infty}^{\overline{\Delta Q}-\theta} h_2\left(p(0|\Delta Q)\right) \cdot \left(\frac{p(\Delta Q|0) + p(\Delta Q|1)}{2}\right) d\Delta Q$$

$$- \int_{\overline{\Delta Q}+\theta}^{+\infty} h_2\left(p(1|\Delta Q)\right) \cdot \left(\frac{p(\Delta Q|0) + p(\Delta Q|1)}{2}\right) d\Delta Q. \tag{33}$$

By introducing $J_0$ and $J_1$ with

$$J_0 \equiv \frac{1}{2\sqrt{2\pi}} \int_{-\infty}^{\overline{\Delta Q}-\theta} h_2\left(\frac{\exp\left(\frac{-(\Delta Q - e_0)^2}{2\sigma_0^2}\right)/\sigma_0}{\exp\left(\frac{-(\Delta Q - e_0)^2}{2\sigma_0^2}\right)/\sigma_0 + \exp\left(\frac{-(\Delta Q - e_1)^2}{2\sigma_1^2}\right)/\sigma_1}\right) \cdot$$

$$\cdot \left(\frac{\exp\left(\frac{-(\Delta Q - e_0)^2}{2\sigma_0^2}\right)}{\sigma_0} + \frac{\exp\left(\frac{-(\Delta Q - e_1)^2}{2\sigma_1^2}\right)}{\sigma_1}\right) d\Delta Q$$

and

$$J_1 \equiv \frac{1}{2\sqrt{2\pi}} \int\limits_{\Delta Q + \theta}^{\infty} h_2 \left( \frac{\exp\left(\frac{-(\Delta Q - e_1)^2}{2\sigma_1^2}\right)/\sigma_0}{\exp\left(\frac{-(\Delta Q - e_0)^2}{2\sigma_0^2}\right)/\sigma_0 + \exp\left(\frac{-(\Delta Q - e_1)^2}{2\sigma_1^2}\right)/\sigma_1} \right) \cdot$$

$$\cdot \left( \frac{\exp\left(\frac{-(\Delta Q - e_0)^2}{2\sigma_0^2}\right)}{\sigma_0} + \frac{\exp\left(\frac{-(\Delta Q - e_1)^2}{2\sigma_1^2}\right)}{\sigma_1} \right) \mathrm{d}\Delta Q,$$

the mutual information I($A$: $B)$ takes the form:

$$\mathrm{I}(A{:}B) = 1 - J_0 - J_1. \tag{34}$$

Physical loss control (step 21) further restricts possible eavesdropping attacks that may go unnoticed: the only option left for an eavesdropper is to create relatively small artificial signal leakages. In the case of one leakage position with factor $r_\mathrm{E}$ at the quantum channel 10a in the vicinity of the transmitter device 11, the mutual information I($A$: $E$) between the eavesdropping device 13 and the transmitter device 11 can be estimated as the Holevo quantity of the ensemble $\left\{ \left( \frac{1}{2}, |\sqrt{r_E}\alpha_0\rangle \right), \left( \frac{1}{2}, |\sqrt{r_E}\alpha_1\rangle \right) \right\}$, i.e.,

$$\mathrm{I}(A{:}E) = h_2 \left( \frac{1 - |\langle\alpha_0|\alpha_1\rangle|^{r_E}}{2} \right), \tag{35}$$

wherein

$$\tag{36}$$

$$|\langle\alpha_0|\alpha_1\rangle|^{r_E} = \exp\left( -\frac{r_E}{2\hbar\Omega} \int\limits_0^T \left\{ \sqrt{P_0(t)} - \sqrt{P_1(t)} \right\}^2 dt \right).$$

From this, the final key generation rate $\frac{L_f}{L}$ after error correction and privacy amplification procedures according to Eq (27) is obtained using the Devetak-Winter equation.

The scalar product $|\langle\alpha_0|\alpha_1\rangle$ may be determined as follows.

*Derivation of the scalar product*

Optical pulses with time-dependent amplitude $F(t)\mathrm{e}^{i\Omega t} \in \mathbb{C}$ (with intensity profile $F(t)$ and carrier frequency $\Omega$) are generated, for instance, by the laser 40 with the frequency $\Omega$ and controlled attenuation and phase-shifts (see above section c). The normalized amplitude $f(t)_\mathrm{e}^{i\Omega t}$ and the normalized intensity profile $f(t)$ can be expressed as follows:

$$f(t)e^{i\Omega t} = \frac{F(t)e^{i\Omega t}}{\sqrt{\int |F(t)|^2 dt}}, \quad f(t) = \frac{F(t)}{\sqrt{\int |F(t)|^2 dt}}, \tag{37}$$

where the integral is taken over $\mathbb{R}$ or over the subspace $\{t|F(t) \neq 0\}$. Hence, $\int dt|f(t)|^2 = 1$. The spectrum of the considered intensity profile can be found as the Fourier transform of the normalized amplitude $f(t)\mathrm{e}^{i\Omega t}$, i.e.,

$$FT[f(t)e^{i\Omega t}](\omega) = \frac{1}{\sqrt{2\pi}} \int_{\mathbb{R}} dt \ f(t)e^{i\Omega t}e^{-i\omega t} = FT[f(t)](\Omega - \omega) \equiv \tilde{f}(\Omega - \omega) \tag{38}$$

The normalized intensity profile $f(t)$ may define the light quantum mode. The creation operator associated with the mode is

$$\hat{b}_f^\dagger = \int_{\mathbb{R}} d\omega \ \tilde{f}(\Omega - \omega)\hat{a}_\omega^\dagger \tag{39}$$

By introducing the further operator

$$\tag{40}$$

$$\hat{a}_t^\dagger \equiv \frac{1}{\sqrt{2\pi}} \int_{\mathbb{R}} d\omega e^{-i\omega t} \hat{a}_\omega^\dagger$$

with

$$\left[\hat{a}_{t_1}, \hat{a}_{t_2}^\dagger\right] = \frac{1}{2\pi} \int_{\mathbb{R}^2} d\omega_1 \ d\omega_2 \ e^{i(-\omega_2 t_2 + \omega_1 t_1)}\left[\hat{a}_{\omega_1}, \hat{a}_{\omega_2}^\dagger\right]$$

$$= \frac{1}{2\pi} \int_{\mathbb{R}^2} d\omega_1 \ d\omega_2 \ e^{i(-\omega_2 t_2 + \omega_1 t_1)}\delta(\omega_1 - \omega_2) = \delta(t_1 - t_2), \tag{41}$$

the creation operator can be written as:

$$\hat{b}_f^\dagger = \int_{\mathbb{R}} dt \ f(t)e^{i\Omega t}\hat{a}_t^\dagger. \tag{42}$$

The creation operator $\hat{b}_f^\dagger$ consists of photon creations for times $t$, described by the further operators $\hat{a}_t^\dagger$, with weights $f(t)$. The phase factor $e^{i\Omega t}$ appears due to time evolution of excited atoms in the laser medium. The commutation relation for new operators are as follows:

$$\left[\hat{b}_f, \hat{b}_f^\dagger\right] = \int dt_1 dt_2 \cdot f^*(t_1)e^{-i\Omega t_1} \cdot f(t_2)e^{i\Omega t_2} \cdot \left[\hat{a}_{t_1}, \hat{a}_{t_2}^\dagger\right] = \int dt|f(t)|^2 = 1. \tag{43}$$

A coherent state $|\alpha\rangle$ in the mode $f(t)$ is defined as an eigenstate of the corresponding annihilation operator:

$$\hat{b}_f|\alpha, f\rangle = \alpha|\alpha, f\rangle \quad \Rightarrow \quad |\alpha, f\rangle = \exp\left(-\frac{|\alpha|^2}{2}\right) \cdot \sum_{n=0}^{\infty} \frac{\alpha^n}{n!}\left(\hat{b}_f^\dagger\right)^n|0\rangle. \tag{44}$$

$\alpha$ may a real non-negative number. Thus, all information about the time-dependent phase of the pulse is included in the complex-valued function $f(t)$:

$$\alpha^2 = |\alpha|^2 = |\alpha|^2 \cdot \int dt|f(t)|^2 = \int dt|F(t)|^2. \tag{45}$$

The scalar product of Fock states in different modes $f(t)$ and $g(t)$ is calculated as follows:

$$\langle m, g | n, f \rangle = \langle 0 | \frac{(\hat{b}_g)^m}{\sqrt{m!}} \cdot \frac{(\hat{b}_f^\dagger)^n}{\sqrt{n!}} | 0 \rangle = \langle 0 | \frac{1}{\sqrt{m!}} \left( \int dt \cdot g^*(t) \cdot e^{-i\Omega t} \cdot \hat{a}_t \right)^m \cdot \frac{1}{\sqrt{n!}} \left( \int dT \cdot f(T) \cdot e^{i\Omega T} \cdot \hat{a}_T^\dagger \right)^n | 0 \rangle$$

$$= \frac{1}{\sqrt{m!\,n!}} \int_{\mathbb{R}^m} d\,t_1 g^*(t_1) \dots dt_m g^*(t_m) \cdot e^{-i\Omega \Sigma t} \int_{\mathbb{R}^n} d\,T_1 f(T_1) \dots dT_n \cdot e^{i\Omega \Sigma T} f(T_n) \cdot \langle 0 | \hat{a}_{t_1} \dots \hat{a}_{t_m} \cdot \hat{a}_{T_1}^\dagger \dots \hat{a}_{T_n}^\dagger | 0 \rangle$$

$$= \frac{1}{\sqrt{m!\,n!}} \int_{\mathbb{R}^m} d\,t_1 g^*(t_1) \dots dt_m g^*(t_m) \int_{\mathbb{R}^n} d\,T_1 f(T_1) \dots dT_n f(T_n) \cdot \left( \delta_{nm} \cdot \sum_\sigma \prod_{i=1}^n \delta\left(T_{\sigma(i)} - t_i\right) \right) =$$

$$= \frac{\delta_{nm}}{n!} \cdot n! \cdot \int dt_1 g^*(t_1) f(t_1) \dots dt_n g^*(t_n) f(t_n) =$$

$$= \delta_{nm} \left( \int dt \cdot f^*(t) \cdot g(t) \right)^n,$$

$$(46)$$

wherein the sum is taken over all permutations $\sigma$ on a set $\{1, \dots, n\}$. After integration, each of the n! components, corresponding to different permutations, contributes equally to the overall sum, which results in the factor n!.

The scalar product of differently shaped coherent states (i.e., of coherent states in different modes) can be calculated as

$$\langle \beta, g | \alpha, f \rangle = \exp\left(-\frac{\beta^2}{2}\right) \cdot \exp\left(-\frac{\alpha^2}{2}\right) \sum_{n,m=0}^{\infty} \frac{\beta^m \cdot \alpha^n}{\sqrt{m!\,n!}} (\langle m, g | n, f \rangle) =$$

$$= \exp\left(-\frac{\beta^2}{2}\right) \cdot \exp\left(-\frac{\alpha^2}{2}\right) \cdot \exp\left(\beta\alpha \int dt \cdot g^*(t) \cdot f(t)\right) =$$

$$= \exp\left(-\frac{1}{2} \int dt \{ |\beta \cdot g(t)|^2 - 2\beta \cdot g^*(t) \cdot \alpha \cdot f(t) + |\alpha \cdot f(t)|^2 \}\right). \qquad (47)$$

Thus:

$$\langle \beta, g | \alpha, f \rangle = \exp\left(-\frac{1}{2} \int dt \{ |G(t)|^2 - 2G^*(t) \cdot F(t) + |F(t)|^2 \}\right) \qquad (48)$$

Eq. (48) describes the most general case. Since each intensity profile $F(t)$, $G(t)$ for fixed time $t$ is a complex number, they may be expressed in terms of absolute value and phase by $F(t) = |F(t)|e^{i\phi_F(t)}$ and $G(t) = |G(t)|e^{i\phi_G(t)}$. For two modulated states that differ only by a constant phase factor and average photon number, an expression of the scalar product of standard coherent states may be obtained.

In the exemplary case of constant phases ($\phi_F(t) = \phi_G(t) =$ const, i.e., only the intensity profiles $|F(t)|^2$, $|G(t)|^2$ are time-dependent functions), the scalar product is:

$$|\langle \beta, g | \alpha, f \rangle|^2 = \exp\left(-\int dt \cdot \{ |F(t)| - |G(t)| \}^2\right). \qquad (49)$$

By expressing the intensity profile in terms of optical power $P_F(t)$ (energy density in time) as opposed to in terms of photon number density in time $|F(t)|^2$ (wherein $\hbar\Omega \cdot |F(t)|^2 = P_F(t)$ with the energy of one photon being $\hbar\Omega$), the scalar product can be expressed as:

$$|\langle \beta, g | \alpha, f \rangle|^2 = \exp\left(-\frac{1}{\hbar\Omega} \int dt \cdot \{ \sqrt{P_F(t)} - \sqrt{P_G(t)} \}^2\right) \qquad (50)$$

Eq. (48) can be alternatively derived as follows. Using $|\alpha|^2 = \int dt |F(t)|^2$ and $|\beta|^2 = \int dt |G(t)|^2$ with real $\alpha$ and $\beta$, the two coherent states can be written as

$$|F\rangle = \exp\left(\int dt F(t)\hat{a}_t^\dagger - \text{h.c.}\right)|0\rangle = \exp\left(\alpha\hat{b}_f^\dagger - \text{h.c.}\right)|0\rangle = e^{\alpha\hat{b}_f^\dagger}|0\rangle e^{-|\alpha|^2/2} = |\alpha, f\rangle. \qquad (51)$$

Similarly, $|G\rangle = |\beta, g\rangle = e^{\beta \hat{b}_g}|0\rangle e^{-|\beta|^2/2}$, using $e^{X+Y} = e^X e^Y e^{-[X,Y]/2}$. The commutator $\left[\hat{b}_f, \hat{b}_g^\dagger\right]$ can hence be written as:

$$
\begin{aligned}
\left[\hat{b}_f, \hat{b}_g^\dagger\right] &= \int dt_1 dt_2 \cdot f^*(t_1) e^{-i\Omega t_1} \cdot g(t_2) e^{i\Omega t_2} \cdot \left[\hat{a}_{t_1}, \hat{a}_{t_2}^\dagger\right] = \\
&= \int dt_1 dt_2 \cdot f^*(t_1) e^{-i\Omega t_1} \cdot g(t_2) e^{i\Omega t_2} \cdot \delta(t_1 - t_2) = \\
&= \int dt_1 \cdot f^*(t_1) \cdot g(t_1) = \\
&= \frac{\int dt_1 \cdot F^*(t_1) \cdot G(t_1)}{\sqrt{\int |F(t)|^2 dt} \sqrt{\int |G(t)|^2 dt}}.
\end{aligned}
\tag{52}
$$

Using $e^{X+Y} = e^X e^Y e^{-[X,Y]/2} = e^Y e^X e^{[X,Y]/2}$, the scalar product $\langle \alpha, f | \beta, g \rangle$ is:

$$
\begin{aligned}
\langle \alpha, f | \beta, g \rangle &= e^{-\frac{|\alpha|^2 + |\beta|^2}{2}} \langle 0 | e^{\beta \hat{b}_f} e^{\alpha \hat{b}_g^\dagger} | 0 \rangle \\
&= e^{-\frac{|\alpha|^2 + |\beta|^2}{2}} \langle 0 | e^{\alpha \hat{b}_g^\dagger} e^{\beta \hat{b}_f} e^{\alpha \beta \left[\hat{b}_f, \hat{b}_g^\dagger\right]} | 0 \rangle \\
&= e^{-\frac{|\alpha|^2 + |\beta|^2}{2}} e^{\alpha \beta C[F,G]} \langle 0 | e^{\alpha \hat{b}_g^\dagger} e^{\beta \hat{b}_f} | 0 \rangle \\
&= \exp\left( \alpha \beta\, C[F,G] - \frac{|\alpha|^2 + |\beta|^2}{2} \right) \\
&= \exp\left( \frac{1}{2} \int dt \cdot \left( 2 F^*(t) \cdot G(t) - |F(t)|^2 - |G(t)|^2 \right) \right)
\end{aligned}
\tag{53}
$$

(f) Comparison with phase coding

To illustrate the effectiveness of the proposed intensity/phase profile coding method, the key generation rates of other coding methods may be compared.

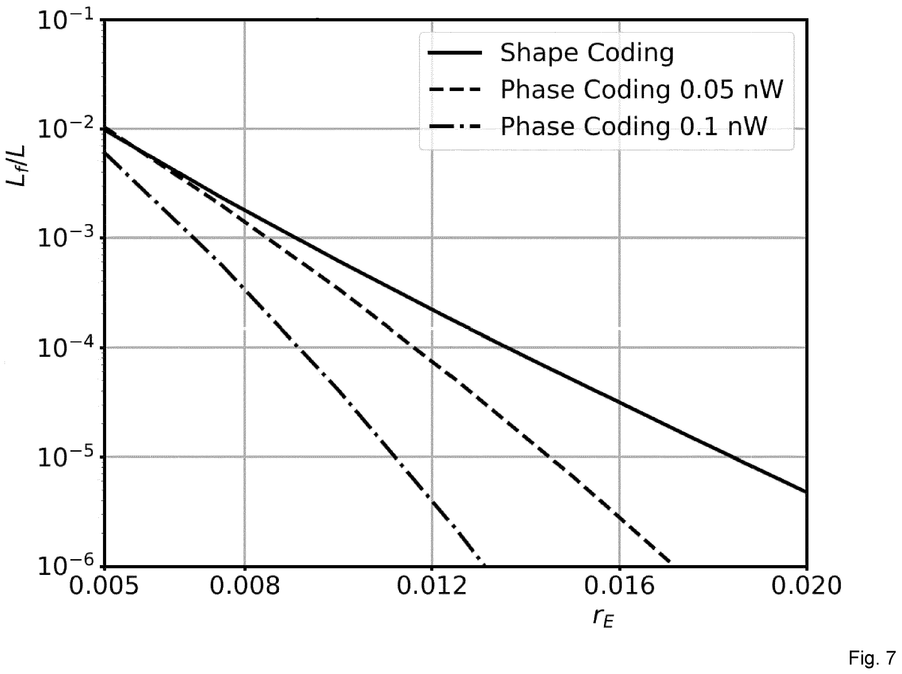

A plot of the key generation rate for phase coding (for different values of input optical power $P$ (0.05 nW and 0.1nW)) and for the proposed method ("shape coding") as a function of $r_E$ is shown in Fig. 7. The length of the quantum channel 10a is 1000 km with a distance of 50 km between neighboring optical amplifiers. The values for shape coding correspond to the values for $d$ = 50 km in Fig. 6. As illustrated by Fig. 7, the proposed coding method is more robust for increased of leakage values $r_E$ than phase coding. Thus, the proposed coding method allows legitimate users to utilize high intensity quantum states with weak distinguishability.

In phase coding, optical pulses corresponding to different logical bits have phases differing by $\pi$ or, alternatively, by some other value. Here, both optical pulses have identical arbitrary intensity profiles, which do not affect security analysis.

Thus, a constant (time-independent) intensity profile may be considered for comparison. To produce such states, no Mach-Zehnder interferometer needs to be employed but merely one controllable phase modulator. In the case of phase difference $\pi$, the scalar product (Eq. (50)) of the quantum states intercepted by the eavesdropper reads:

$$
|\langle \alpha_0 | \alpha_1 \rangle|^{r_E} = \exp\left( -\frac{r_E}{2\hbar\Omega} \int_0^T \left\{ \sqrt{P_0(t)} + \sqrt{P_1(t)} \right\}^2 dt \right),
\tag{54}
$$

wherein the optical power terms are equal and do not depend on time: $P_0(t) = P_1(t) = P$. Here, the eavesdropping device 13 is assumed to be at the quantum channel 10a close to the transmitter device 11. Thus, there are no additional correlations between the subsystems of the eavesdropping device 13 and the receiver device 12, caused by the optical amplifiers. Hence, the Holevo value of the ensemble of pure states may be employed for estimating the intercepted information. The error probability $p_{err}$ and the probability $p(\checkmark)$ of a conclusive result at the receiver device are as follows:

$$p_{\text{err}} = \frac{1}{2} \cdot \left( 1 - \text{erf}\left( \frac{\sqrt{2}\left( \theta + \sqrt{\overline{N}(1 - r_E)} \right)}{\sqrt{1 + 2(G - 1)}} \right) \right),$$

$$p(\checkmark) = 1 - \frac{1}{2} \cdot \text{erf}\left( \frac{\sqrt{2}\left( \theta - \sqrt{\overline{N}(1 - r_E)} \right)}{\sqrt{1 + 2(G - 1)}} \right) - \frac{1}{2} \cdot \text{erf}\left( \frac{\sqrt{2}\left( \theta + \sqrt{\overline{N}(1 - r_E)} \right)}{\sqrt{1 + 2(G - 1)}} \right),$$

$$(55)$$

wherein $\theta$ is the post-selection parameter and $\overline{N} = P \cdot T_s/(\hbar\Omega)$ is the average total number of photons in each optical pulse. A sequence of optical amplifiers and losses can be reduced to one pair of loss and amplification. $G = 1 + (10^{0.02 \cdot d} - 1) \cdot D_{AB}/d$ is the effective amplification factor. Since all probabilities are determined, one may estimate the key generation rate analogous to Eq. (27).

(g) Comparison with intensity coding

In intensity coding, different logical bits get encoded into coherent states with differing mean numbers of photons (i.e., different mean optical powers). Thus, optical pulses corresponding to different bit values have the same time distribution of photons but a different average number of photons.

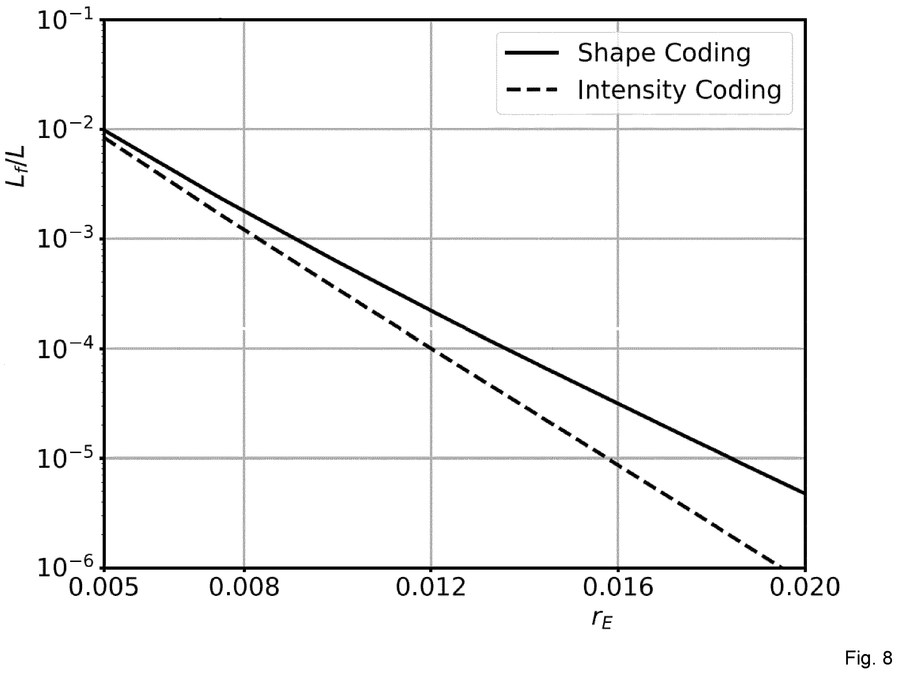

Fig. 8 shows a plot of the key generation rate for intensity coding and for the proposed method ("shape coding") as a function of $r_E$. The length of the quantum channel 10a is 1000 km with a distance of 50 km between neighboring optical amplifiers. The values for shape coding correspond to the values for $d = 50$ km in Fig. 6. As illustrated by the figure, the proposed method provides an increased key generation rate for given $r_E$.

To prepare quantum states with intensity coding, the transmitter device 11 may control only the first phase shift $\varphi$ (t). For the purpose of security analysis, it is sufficient to consider rectangular pulses with constant phase value zero. After preparation, the pure quantum states pass through a quantum channel 11a comprising optical amplifiers. Hence, the resulting quantum states at the receiver device 12 are mixed:

$$\text{"0"} \mapsto |\alpha_0\rangle\langle\alpha_0| \mapsto \rho_0, \quad \text{"1"} \mapsto |\alpha_1\rangle\langle\alpha_1| \mapsto \rho_1, \qquad (56)$$

wherein $|\alpha_a\rangle$ are coherent states with $\alpha_a \in \mathbb{R}$. To distinguish between the mixed states $\rho_0$ and $\rho_1$, simple intensity measurements can be carried out in the receiver device 12. The photon-number distributions may be approximated by Gaussian distributions. Thus, the random variable describing the outcomes of a measurement in the receiver device 12 with bit "a" has a normal distribution with the following parameters:

$$e_a = \mathbb{E}\big[\tilde{N}_a\big] = N_a + M(G - 1) = \frac{T_s}{\hbar\Omega}P_a + M(G - 1),$$

$$\sigma_a^2 = \mathbb{D}\big[\tilde{N}_a\big] = (2M(G - 1) + 1) \cdot N_a + M(G - 1) \cdot (M(G - 1) + 1), \qquad (57)$$

wherein M denotes the number of optical amplifiers along the quantum channel 10a and $G$ denotes the amplification factor of each amplifier. The variables $P_{0(1)}$ denote the average optical powers of each signal. The discrete value $N$ may be treated as a continuous value so that the probability density distributions describing the outcomes of the measurements may be expressed as follows:

$$p(N|a) \equiv p(\text{measured } N \mid \text{sent bit "a"}) = \frac{1}{\sqrt{2\pi\sigma_a^2}} \cdot \exp\left( \frac{-(N - e_a)^2}{2\sigma_a^2} \right). \qquad (58)$$

Hence,

$$p(b=0|a) = \frac{1}{\sqrt{2\pi}\dot{\sigma}_a} \int\limits_{-\infty}^{\overline{N}-\theta_0} \exp\left(\frac{-(N-e_a)^2}{2\sigma_a^2}\right) dN = \frac{1}{\sqrt{\pi}} \int\limits_{-\frac{N-\theta_0-e_a}{\sqrt{2}\cdot\sigma_a}}^{+\infty} e^{-z^2} dz = \frac{1}{2}\operatorname{erfc}\left(\frac{\theta_0 - \overline{N} + e_a}{\sqrt{2}\cdot\sigma_a}\right),$$

$$p(b=1|a) = \frac{1}{\sqrt{2\pi}\dot{\sigma}_a} \int\limits_{\overline{N}+\theta_1}^{+\infty} \exp\left(\frac{-(N-e_a)^2}{2\sigma_a^2}\right) dN = \frac{1}{\sqrt{\pi}} \int\limits_{-\frac{N+\theta_1-e_a}{\sqrt{2}\cdot\sigma_a}}^{+\infty} e^{-z^2} dz = \frac{1}{2}\operatorname{erfc}\left(\frac{\theta_1 + \overline{N} - e_a}{\sqrt{2}\cdot\sigma_a}\right),$$

$$(59)$$

which is equivalent to:

$$p(b|a) = \frac{1}{2}\operatorname{erfc}\left(\frac{\theta_b + (-1)^b \cdot (e_a - \overline{N})}{\sqrt{2}\cdot\sigma_a}\right) = \frac{1}{2}\operatorname{erfc}\left(\frac{\theta_b + (-1)^b \cdot (e_a - e_0/2 - e_1/2)}{\sqrt{2}\cdot\sigma_a}\right)$$

$$= \frac{1}{2}\operatorname{erfc}\left(\frac{\theta_b + (-1)^{a+b} \cdot (e_0 - e_1)/2}{\sqrt{2}\cdot\sigma_a}\right).$$

$$(60)$$

Assuming without loss of generality that $e_1 > e_0$, the error probability can be expressed as

$$p_{\text{err}} = \frac{1}{2} \cdot p\left(N < \overline{N} - \theta|1\right) + \frac{1}{2} \cdot p\left(N > \overline{N} + \theta|0\right),$$

$$(61)$$

wherein $\overline{N} = (e_0 + e_1)/2$ is the average number of photons in an optical pulse.
Including Eq. (58) yields:

$$p_{\text{err}} = \frac{1}{2\sqrt{2\pi}\sigma_1} \cdot \int\limits_{-\infty}^{\overline{N}-\theta} \exp\left(\frac{-(N-e_1)^2}{2\sigma_1^2}\right) dN + \frac{1}{2\sqrt{2\pi}\sigma_0} \cdot \int\limits_{\overline{N}+\theta}^{+\infty} \exp\left(\frac{-(N-e_0)^2}{2\sigma_0^2}\right) dN =$$

$$= \frac{1}{2\sqrt{2\pi}\sigma_1} \int\limits_{-\infty}^{\overline{N}-\theta-e_1} \exp\left(-\left[\frac{y}{\sqrt{2}\sigma_1}\right]^2\right) dy + \frac{1}{2\sqrt{2\pi}\sigma_0} \int\limits_{\overline{N}+\theta-e_1}^{+\infty} \exp\left(-\left[\frac{y}{\sqrt{2}\sigma_0}\right]^2\right) dy =$$

$$= \frac{1}{4} \cdot \frac{2}{\sqrt{\pi}} \int\limits_{-\frac{\overline{N}-\theta-e_1}{\sqrt{2}\sigma_1}}^{+\infty} \exp\left(-z^2\right) dz + \frac{1}{4} \cdot \frac{2}{\sqrt{\pi}} \int\limits_{\frac{\overline{N}+\theta-e_0}{\sqrt{2}\sigma_0}}^{+\infty} \exp\left(-z^2\right) dz =$$

$$= \frac{1}{4}\left[\operatorname{erfc}\left(\frac{-\overline{N}+\theta+e_1}{\sqrt{2}\sigma_1}\right) + \operatorname{erfc}\left(\frac{\overline{N}+\theta-e_0}{\sqrt{2}\sigma_0}\right)\right].$$

$$(62)$$

Analogously to the preceding section, the resulting expression for the probability of a conclusive outcome is:

$$p(\checkmark) = \frac{1}{4}\left[\frac{2}{\sqrt{\pi}}\int_{-\infty}^{\frac{\overline{N}-\theta-e_1}{\sqrt{2}\sigma_1}}\exp\left(-z^2\right)dz + \frac{2}{\sqrt{\pi}}\int_{-\infty}^{\frac{\overline{N}-\theta-e_0}{\sqrt{2}\sigma_0}}\exp\left(-z^2\right)dz\right.$$

$$\left.+\frac{2}{\sqrt{\pi}}\int_{\frac{\overline{N}+\theta-e_1}{\sqrt{2}\sigma_1}}^{+\infty}\exp\left(-z^2\right)dz + \frac{2}{\sqrt{\pi}}\int_{\frac{\overline{N}+\theta-e_0}{\sqrt{2}\sigma_0}}^{+\infty}\exp\left(-z^2\right)dz\right] =$$

$$= \frac{1}{4}\left[\text{erfc}\left(\frac{-\overline{N}+\theta+e_1}{\sqrt{2}\sigma_1}\right) + \text{erfc}\left(\frac{-\overline{N}+\theta+e_0}{\sqrt{2}\sigma_0}\right) + \text{erfc}\left(\frac{\overline{N}+\theta-e_1}{\sqrt{2}\sigma_1}\right) + \text{erfc}\left(\frac{\overline{N}+\theta-e_0}{\sqrt{2}\sigma_0}\right)\right].$$

$$(63)$$

Corresponding to Eq. (31) and Eq. (32), the mutual information between the transmitter device 11 and the receiver device 12 can be calculated as:

$$I(A:B) = H(A) + H(B) - H(AB)$$

$$= h_2\left(\sum_{b=0,1}\frac{p(b|0)}{2p(\checkmark)}\right) + h_2\left(\sum_{a=0,1}\frac{p(0|a)}{2p(\checkmark)}\right) + \sum_{a=0,1}\sum_{b=0,1}\frac{p(b|a)}{2p(\checkmark)}\cdot\log_2\left(\frac{p(b|a)}{2p(\checkmark)}\right)$$

$$p(\checkmark) = \frac{1}{2}\sum_{a=0,1}\sum_{b=0,1}p(b|a).$$

$$(64)$$

Estimating the eavesdropper's information requires the scalar product of the seized quantum states, which for constant phase value and different average photon numbers is:

$$|\langle\alpha_0|\alpha_1\rangle|^{r_E} = \exp\left(-\frac{r_E}{2}\cdot\frac{T_s}{\hbar\Omega}\left\{\sqrt{P_1} - \sqrt{P_0}\right\}^2\right)$$

$$(65)$$

For Fig. 8, the key generation rate for different values of average power $P = \frac{P_0+P_1}{2}$ was optimized over the power difference $|e_0 - e_1|$. The optimal difference for all the considered $P$ was determined to be about $|e_0 - e_1| \approx 10^{-1}\cdot P$.

The features disclosed in this specification, the figures and/or the claims may be material for the realization of various embodiments, taken in isolation or in various combinations thereof.

## Claims

1.   An encoding method for quantum key distribution, the method being carried out in a transmitter device (11) having a classical processor (11a) and means for preparing and transmitting quantum signals, the method comprising:

- generating an encoder initial bit sequence;
- generating, from the encoder initial bit sequence, a quantum signal comprising a plurality of optical pulses, wherein generating each optical pulse of the plurality of optical pulses comprises at least one of:

- modulating an intensity profile of the optical pulse according to an intensity function which depends on a time and on a first encoder value of at least one first bit of the encoder initial bit sequence; and
- modulating a phase profile of the optical pulse according to a phase function which depends on a time and a second encoder value of at least one second bit of the encoder initial bit sequence;

- transmitting the plurality of optical pulses to a receiver device (12) via a quantum channel (10a); and
- determining a shared key shared between the transmitter device (11) and the receiver device (12) from the encoder initial bit sequence by classical post-processing and at least one of transmitting classical information to the receiver device (12) and receiving further classical information from the receiver device (12).

2. The method according to claim 1, wherein each optical pulse is generated from a laser beam and using a Mach-Zehnder interferometer (41).

3. The method according to claims 1 or 2, wherein

- generating each optical pulse of the plurality of optical pulses comprises modulating the intensity profile of the optical pulse according to the intensity function and the intensity profile is modulated by at least one of a first phase modulator and a laser source intensity; and/or
- generating each optical pulse of the plurality of optical pulses comprises modulating the phase profile of the optical pulse according to the phase function and the phase profile is modulated by a second phase modulator.

4. The method according to at least one of the preceding claims, wherein

- generating each optical pulse of the plurality of optical pulses comprises modulating the intensity profile of the optical pulse according to the intensity function and the intensity function comprises, depending on the first encoder value, an oscillatory component with time-dependent frequency; and/or
- generating each optical pulse of the plurality of optical pulses comprises modulating the phase profile of the optical pulse according to the phase function and the phase function comprises, depending on the second encoder value, a further oscillatory component with time-dependent frequency.

5. The method according to at least one of the preceding claims, wherein the intensity function comprises, depending on the first encoder value, a frequency chirp component, preferably at least one of a linear frequency chirp component, a quadratic frequency chirp component, a cubic frequency chirp component, and an exponential frequency chirp component.

6. The method according to at least one of the preceding claims, wherein

- generating each optical pulse of the plurality of optical pulses comprises modulating the intensity profile of the optical pulse according to the intensity function and the intensity function depends on the first encoder value of at least two first bits of the encoder initial bit sequence; and/or
- generating each optical pulse of the plurality of optical pulses comprises modulating the phase profile of the optical pulse according to the phase function and the phase function depends on the second encoder value of at least two second bits of the encoder initial bit sequence.

7. The method according to at least one of the preceding claims, wherein each optical pulse has a pulse length from 1 ns to 1000 ns, preferably from 50 ns to 200 ns, more preferably from 80 ns to 120 ns.

8. A decoding method for quantum key distribution, the method being carried out in a receiver device (12) having a classical processor (12a) and means for receiving and measuring quantum signals, the method comprising:

- receiving a quantum signal comprising a plurality of optical pulses from a transmitter device (11) via a quantum channel (10a);
- determining a decoder initial bit sequence from the plurality of optical pulses, the determining comprising, for each optical pulse, at least one of:

- determining an approximate intensity profile of the optical pulse by measuring a plurality of intensity values of the optical pulse for a plurality of time bins, and determining, from the approximate intensity profile, a first decoder value of at least one first bit of the decoder initial bit sequence, and
- determining an approximate phase profile of the optical pulse by measuring a plurality of phase values of the optical pulse for a plurality of time bins, and determining, from the approximate phase profile, a second decoder value of at least one second bit of the decoder initial bit sequence; and

- determining a shared key shared between the transmitter device (11) and the receiver device (12) from the decoder initial bit sequence by classical post-processing and at least one of receiving classical information from the transmitter device (11) and transmitting further classical information to the transmitter device (11).

9. The method according to claim 8, wherein

- determining the decoder initial bit sequence from the plurality of optical pulses comprises, for each optical pulse, determining the approximate intensity profile of the optical pulse and determining the first decoder value comprises comparing the approximate intensity profile with ideal approximate intensity profiles; and/or
- determining the decoder initial bit sequence from the plurality of optical pulses comprises, for each optical pulse, determining the approximate phase profile of the optical pulse and determining the second decoder value comprises comparing the approximate phase profile with ideal approximate phase profiles.

10. The method according to claim 9, comprising at least one of:

- determining the decoder initial bit sequence from the plurality of optical pulses comprises, for each optical pulse, determining the approximate intensity profile of the optical pulse and determining a first measured correlator difference from the approximate intensity profile and the ideal approximate intensity profiles and determining the first decoder value by comparing the first measured correlator difference with a first threshold value; and
- determining the decoder initial bit sequence from the plurality of optical pulses comprises, for each optical pulse, determining the approximate phase profile of the optical pulse and determining a second measured correlator difference from the approximate phase profile and the ideal approximate phase profiles and determining the second decoder value by comparing the second measured correlator difference with a second threshold value.

11. The method according to at least one of the preceding claims, further comprising determining optical signal losses along the quantum channel (10a), preferably optical signal losses depending on a position along the quantum channel (10a).

12. A method for quantum key distribution, the method being carried out in a system comprising

- a transmitter device (11) having a classical processor (11a) and means for preparing and transmitting quantum signals; and
- a receiver device (12) having a further classical processor (12a) and means for receiving and measuring quantum signals,

the method comprising:

- generating an encoder initial bit sequence in the transmitter device (11);
- generating, from the encoder initial bit sequence, a quantum signal comprising a plurality of optical pulses in the transmitter device (11), wherein generating each optical pulse of the plurality of optical pulses comprises at least one of:

- modulating an intensity profile of the optical pulse according to an intensity function which depends on a time and on a first encoder value of at least one first bit of the encoder initial bit sequence and
- modulating a phase profile of the optical pulse according to a phase function which depends on a time and a second encoder value of at least one second bit of the encoder initial bit sequence;

- transmitting the plurality of optical pulses from the transmitter device (11) to the receiver device (12) via a quantum channel (10a) and receiving the plurality of optical pulses in the receiver device (12);
- determining a decoder initial bit sequence from the plurality of optical pulses, the determining comprising for each optical pulse at least one of:

- determining an approximate intensity profile of the optical pulse by measuring a plurality of intensity values of the optical pulse for a plurality of time bins, and determining, from the approximate intensity profile, a first decoder value of at least one first bit of the decoder initial bit sequence; and
- determining an approximate phase profile of the optical pulse by measuring a plurality of phase values of the optical pulse for a plurality of time bins, and determining, from the approximate phase profile, a second decoder value of at least one second bit of the decoder initial bit sequence; and

- determining, in the transmitter device (11) from the encoder initial bit sequence and in the receiver device (12) from the decoder initial bit sequence, by classical post-processing and at least one of transmitting classical information from the transmitter device (11) to the receiver device (12) and transmitting further classical information from the receiver device (12) to the transmitter device (11), a shared key shared between the transmitter device (11) and the receiver device (12).

13. A transmitter device (11) for quantum key distribution comprising a classical processor (11a) and means for preparing and transmitting quantum signals and being configured to carry out the following steps:

- generating an encoder initial bit sequence;
- generating, from the encoder initial bit sequence, a quantum signal comprising a plurality of optical pulses, wherein generating each optical pulse of the plurality of optical pulses comprises at least one of:

- modulating an intensity profile of the optical pulse according to an intensity function which depends on a time and on a first encoder value of at least one first bit of the encoder initial bit sequence and
- modulating a phase profile of the optical pulse according to a phase function which depends on a time and a second encoder value of at least one second bit of the encoder initial bit sequence,

- transmitting the plurality of optical pulses to a receiver device (12) via a quantum channel (10a); and
- determining a shared key shared between the transmitter device (11) and the receiver device (12) from the encoder initial bit sequence by classical post-processing and at least one of transmitting classical information to the receiver device (12) and receiving further classical information from the receiver device (12).

14. A receiver device (12) for quantum key distribution comprising a classical processor (12a) and means for receiving and measuring quantum signals and being configured to carry out the following steps:

- receiving a quantum signal comprising a plurality of optical pulses from a transmitter device (11) via a quantum channel (10a),
- determining a decoder initial bit sequence from the plurality of optical pulses, the determining comprising for each optical pulse at least one of:

- determining an approximate intensity profile of the optical pulse by measuring a plurality of intensity values of the optical pulse for a plurality of time bins and determining, from the approximate intensity profile, a first decoder value of at least one first bit of the decoder initial bit sequence, and
- determining an approximate phase profile of the optical pulse by measuring a plurality of phase values of the optical pulse for a plurality of time bins and determining, from approximate phase profile, a second decoder value of at least one second bit of the decoder initial bit sequence; and

- determining a shared key shared between the transmitter device (11) and the receiver device (12) from the decoder initial bit sequence by classical post-processing and at least one of receiving classical information from the transmitter device (11) and transmitting further classical information to the transmitter device (11).

15. A system for quantum key distribution comprising

- a transmitter device (11) having a classical processor (11a) and means for preparing and transmitting quantum signals; and
- a receiver device (12) having a further classical processor (12a) and means for receiving and measuring quantum signals,

the system being configured to carry out the following steps:

- generating an encoder initial bit sequence in the transmitter device (11);
- generating, from the first initial bit sequence, a quantum signal comprising a plurality of optical pulses in the transmitter device (11), wherein generating each optical pulse of the plurality of optical pulses comprises at least one of:

- modulating an intensity profile of the optical pulse according to an intensity function which depends on a time and on a first encoder value of at least one first bit of the encoder initial bit sequence; and
- modulating a phase profile of the optical pulse according to a phase function which depends on a time and a second encoder value of at least one second bit of the encoder initial bit sequence,

- transmitting the plurality of optical pulses from the transmitter device (11) to the receiver device (12) via a quantum channel (10a) and receiving the plurality of optical pulses in the receiver device (12);
- determining a decoder initial bit sequence from the plurality of optical pulses, the determining comprising for each optical pulse at least one of:

- determining an approximate intensity profile of the optical pulse by measuring a plurality of intensity values of the optical pulse for a plurality of time bins, and determining, from the approximate intensity profile, a first decoder value of at least one first bit of the decoder initial bit sequence, and
- determining an approximate phase profile of the optical pulse by measuring a plurality of phase values of the optical pulse for a plurality of time bins and determining, from approximate phase profile, a second decoder value of at least one second bit of the decoder initial bit sequence; and

- determining, in the transmitter device (11) from the encoder initial bit sequence and in the receiver device (12) from the decoder initial bit sequence, by classical post-processing and at least one of transmitting classical information from the transmitter device (11) to the receiver device (12) and transmitting further classical information from the receiver device (12) to the transmitter device (11), a shared key shared between the transmitter device (11) and the receiver device (12).

**Patentansprüche**

1. Codierverfahren zum Quantenschlüsselaustausch, wobei das Verfahren in einer Sendervorrichtung (11) ausgeführt wird, die einen klassischen Prozessor (11a) und Mittel zum Präparieren und Senden von Quantensignalen aufweist, wobei das Verfahren umfasst:

- Erzeugen einer Codierer-Anfangsbitsequenz;
- Erzeugen, aus der Codierer-Anfangsbitsequenz, eines Quantensignals, das eine Mehrzahl von optischen Impulsen umfasst, wobei das Erzeugen jedes optischen Impulses der Mehrzahl von optischen Impulsen mindestens eines umfasst von:

- Modulieren eines Intensitätsprofils des optischen Impulses gemäß einer Intensitätsfunktion, die von einer Zeit und von einem ersten Codierer-Wert von mindestens einem ersten Bit der Codierer-Anfangsbitsequenz abhängt; und
- Modulieren eines Phasenprofils des optischen Impulses gemäß einer Phasenfunktion, die von einer Zeit und einem zweiten Codierer-Wert von mindestens einem zweiten Bit der Codierer-Anfangsbitsequenz abhängt;

- Übertragen der Mehrzahl von optischen Impulsen an eine Empfängervorrichtung (12) über einen Quantenkanal (10a); und
- Bestimmen eines gemeinsamen Schlüssels, der der Sendervorrichtung (11) und der Empfängervorrichtung (12) gemeinsam ist, aus der Codierer-Anfangsbitsequenz durch klassisches Post-Processing und mindestens eines von Übertragen von klassischen Informationen an die Empfängervorrichtung (12) und Empfangen weiterer klassischer Informationen von der Empfängervorrichtung (12).

2. Verfahren nach Anspruch 1, wobei jeder optische Impuls aus einem Laserstrahl und unter Verwendung eines Mach-Zehnder-Interferometers (41) erzeugt wird.

3. Verfahren nach Anspruch 1 oder 2, wobei

- das Erzeugen jedes optischen Impulses der Mehrzahl von optischen Impulsen das Modulieren des Intensitätsprofils des optischen Impulses gemäß der Intensitätsfunktion umfasst und das Intensitätsprofil durch einen ersten Phasenmodulator und/oder eine Laserquellenintensität moduliert wird; und/oder
- das Erzeugen jedes optischen Impulses der Mehrzahl von optischen Impulsen das Modulieren des Phasenprofils des optischen Impulses gemäß der Phasenfunktion umfasst und das Phasenprofil durch einen zweiten Phasenmodulator moduliert wird.

4. Verfahren nach mindestens einem der vorhergehenden Ansprüche, wobei

- das Erzeugen jedes optischen Impulses der Mehrzahl von optischen Impulsen das Modulieren des Intensitätsprofils des optischen Impulses gemäß der Intensitätsfunktion umfasst und die Intensitätsfunktion in Abhängigkeit von dem ersten Codierer-Wert eine Schwingungskomponente mit zeitabhängiger Frequenz umfasst; und/oder
- das Erzeugen jedes optischen Impulses der Mehrzahl von optischen Impulsen das Modulieren des Phasenprofils des optischen Impulses gemäß der Phasenfunktion umfasst und die Phasenfunktion in Abhängigkeit von dem zweiten Codierer-Wert eine weitere Schwingungskomponente mit zeitabhängiger Frequenz umfasst.

**5.** Verfahren nach mindestens einem der vorhergehenden Ansprüche, wobei die Intensitätsfunktion in Abhängigkeit von dem ersten Codierer-Wert eine Frequenz-Chirp-Komponente umfasst, vorzugsweise mindestens eine von einer linearen Frequenz-Chirp-Komponente, einer quadratischen Frequenz-Chirp-Komponente, einer kubischen Frequenz-Chirp-Komponente und einer exponentiellen Frequenz-Chirp-Komponente.

**6.** Verfahren nach mindestens einem der vorhergehenden Ansprüche, wobei

- das Erzeugen jedes optischen Impulses der Mehrzahl von optischen Impulsen das Modulieren des Intensitätsprofils des optischen Impulses gemäß der Intensitätsfunktion umfasst und die Intensitätsfunktion von dem ersten Codierer-Wert von mindestens zwei ersten Bits der Codierer-Anfangsbitsequenz abhängt; und/oder
- das Erzeugen jedes optischen Impulses der Mehrzahl von optischen Impulsen das Modulieren des Phasenprofils des optischen Impulses gemäß der Phasenfunktion umfasst und die Phasenfunktion von dem zweiten Codierer-Wert von mindestens zwei zweiten Bits der Codierer-Anfangsbitsequenz abhängt.

**7.** Verfahren nach mindestens einem der vorhergehenden Ansprüche, wobei jeder optische Impuls eine Impulslänge von 1 ns bis 1000 ns, vorzugsweise von 50 ns bis 200 ns, weiter bevorzugt von 80 ns bis 120 ns aufweist.

**8.** Decodierverfahren zum Quantenschlüsselaustausch, wobei das Verfahren in einer Empfängervorrichtung (12) ausgeführt wird, die einen klassischen Prozessor (12a) und Mittel zum Empfangen und Messen von Quantensignalen aufweist, wobei das Verfahren umfasst:

- Empfangen eines Quantensignals, das eine Mehrzahl von optischen Impulsen umfasst, von einer Sendervorrichtung (11) über einen Quantenkanal (10a);
- Bestimmen einer Decodierer-Anfangsbitsequenz aus der Mehrzahl von optischen Impulsen, wobei das Bestimmen für jeden optischen Impuls mindestens eines umfasst von:

  - Bestimmen eines approximativen Intensitätsprofils des optischen Impulses durch Messen einer Mehrzahl von Intensitätswerten des optischen Impulses für eine Mehrzahl von Zeit-Bins und Bestimmen, aus dem approximativen Intensitätsprofil, eines ersten Decodierer-Werts von mindestens einem ersten Bit der Decodierer-Anfangsbitsequenz, und
  - Bestimmen eines approximativen Phasenprofils des optischen Impulses durch Messen einer Mehrzahl von Phasenwerten des optischen Impulses für eine Mehrzahl von Zeit-Bins und Bestimmen, aus dem approximativen Phasenprofil, eines zweiten Decodierer-Werts von mindestens einem zweiten Bit der Decodierer-Anfangsbitsequenz; und

  - Bestimmen eines gemeinsamen Schlüssels, der der Sendervorrichtung (11) und der Empfängervorrichtung (12) gemeinsam ist, aus der Decodierer-Anfangsbitsequenz durch klassisches Post-Processing und mindestens eines von Empfangen von klassischen Informationen von der Sendervorrichtung (11) und Übertragen weiterer klassischer Informationen an die Sendervorrichtung (11).

**9.** Verfahren nach Anspruch 8, wobei

- das Bestimmen der Decodierer-Anfangsbitsequenz aus der Mehrzahl von optischen Impulsen für jeden optischen Impuls das Bestimmen des approximativen Intensitätsprofils des optischen Impulses umfasst und das Bestimmen des ersten Decodierer-Werts ein Vergleichen des approximativen Intensitätsprofils mit idealen approximativen Intensitätsprofilen umfasst; und/oder
- das Bestimmen der Decodierer-Anfangsbitsequenz aus der Mehrzahl von optischen Impulsen für jeden optischen Impuls das Bestimmen des approximativen Phasenprofils des optischen Impulses umfasst und das Bestimmen des zweiten Decodierer-Werts ein Vergleichen des approximativen Phasenprofils mit idealen approximativen Phasenprofilen umfasst.

10. Verfahren nach Anspruch 9, umfassend mindestens eines von:

- das Bestimmen der Decodierer-Anfangsbitsequenz aus der Mehrzahl von optischen Impulsen umfasst für jeden optischen Impuls das Bestimmen des approximativen Intensitätsprofils des optischen Impulses und das Bestimmen einer ersten gemessenen Korrelatordifferenz aus dem approximativen Intensitätsprofil und den idealen approximativen Intensitätsprofilen und das Bestimmen des ersten Decodierer-Werts durch Vergleichen der ersten gemessenen Korrelatordifferenz mit einem ersten Schwellenwert; und
- das Bestimmen der Decodierer-Anfangsbitsequenz aus der Mehrzahl von optischen Impulsen umfasst für jeden optischen Impuls das Bestimmen des approximativen Phasenprofils des optischen Impulses und das Bestimmen einer zweiten gemessenen Korrelatordifferenz aus dem approximativen Phasenprofil und den idealen approximativen Phasenprofilen und das Bestimmen des zweiten Decodierer-Werts durch Vergleichen der zweiten gemessenen Korrelatordifferenz mit einem zweiten Schwellenwert.

11. Verfahren nach mindestens einem der vorhergehenden Ansprüche, ferner umfassend das Bestimmen von optischen Signalverlusten entlang des Quantenkanals (10a), vorzugsweise von optischen Signalverlusten in Abhängigkeit von einer Position entlang des Quantenkanals (10a).

12. Verfahren zum Quantenschlüsselaustausch, wobei das Verfahren in einem System ausgeführt wird, umfassend

- eine Sendervorrichtung (11), die einen klassischen Prozessor (11a) und Mittel zum Präparieren und Senden von Quantensignalen aufweist; und
- eine Empfängervorrichtung (12), die einen weiteren klassischen Prozessor (12a) und Mittel zum Empfangen und Messen von Quantensignalen aufweist,

wobei das Verfahren umfasst:

- Erzeugen einer Codierer-Anfangsbitsequenz in der Sendervorrichtung (11);
- Erzeugen, aus der Codierer-Anfangsbitsequenz, eines Quantensignals, das eine Mehrzahl von optischen Impulsen umfasst, in der Sendervorrichtung (11), wobei das Erzeugen jedes optischen Impulses der Mehrzahl von optischen Impulsen mindestens eines umfasst von:

  - Modulieren eines Intensitätsprofils des optischen Impulses gemäß einer Intensitätsfunktion, die von einer Zeit und von einem ersten Codierer-Wert von mindestens einem ersten Bit der Codierer-Anfangsbitsequenz abhängt; und
  - Modulieren eines Phasenprofils des optischen Impulses gemäß einer Phasenfunktion, die von einer Zeit und einem zweiten Codierer-Wert von mindestens einem zweiten Bit der Codierer-Anfangsbitsequenz abhängt;

- Übertragen der Mehrzahl von optischen Impulsen von der Sendervorrichtung (11) an die Empfängervorrichtung (12) über einen Quantenkanal (10a) und Empfangen der Mehrzahl von optischen Impulsen in der Empfängervorrichtung (12);
- Bestimmen einer Decodierer-Anfangsbitsequenz aus der Mehrzahl von optischen Impulsen, wobei das Bestimmen für jeden optischen Impuls mindestens eines umfasst von:

  - Bestimmen eines approximativen Intensitätsprofils des optischen Impulses durch Messen einer Mehrzahl von Intensitätswerten des optischen Impulses für eine Mehrzahl von Zeit-Bins und Bestimmen, aus dem approximativen Intensitätsprofil, eines ersten Decodierer-Werts von mindestens einem ersten Bit der Decodierer-Anfangsbitsequenz; und
  - Bestimmen eines approximativen Phasenprofils des optischen Impulses durch Messen einer Mehrzahl von Phasenwerten des optischen Impulses für eine Mehrzahl von Zeit-Bins und Bestimmen, aus dem approximativen Phasenprofil, eines zweiten Decodierer-Werts von mindestens einem zweiten Bit der Decodierer-Anfangsbitsequenz; und

- Bestimmen, in der Sendervorrichtung (11) aus der Codierer-Anfangsbitsequenz und in der Empfängervorrichtung (12) aus der Decodierer-Anfangsbitsequenz, durch klassisches Post-Processing und mindestens eines von Übertragen von klassischen Informationen von der Sendervorrichtung (11) an die Empfängervorrichtung (12) und Übertragen weiterer klassischer Informationen von der Empfängervorrichtung (12) an die Sendervorrichtung (11), eines gemeinsamen Schlüssels, der der Sendervorrichtung (11) und der Empfängervorrichtung (12) gemeinsam ist.

13. Sendervorrichtung (11) zum Quantenschlüsselaustausch, umfassend einen klassischen Prozessor (11a) und Mittel zum Präparieren und Senden von Quantensignalen und eingerichtet zum Ausführen der folgenden Schritte:

- Erzeugen einer Codierer-Anfangsbitsequenz;
- Erzeugen, aus der Codierer-Anfangsbitsequenz, eines Quantensignals, das eine Mehrzahl von optischen Impulsen umfasst, wobei das Erzeugen jedes optischen Impulses der Mehrzahl von optischen Impulsen mindestens eines umfasst von:

- Modulieren eines Intensitätsprofils des optischen Impulses gemäß einer Intensitätsfunktion, die von einer Zeit und von einem ersten Codierer-Wert von mindestens einem ersten Bit der Codierer-Anfangsbitsequenz abhängt; und
- Modulieren eines Phasenprofils des optischen Impulses gemäß einer Phasenfunktion, die von einer Zeit und einem zweiten Codierer-Wert von mindestens einem zweiten Bit der Codierer-Anfangsbitsequenz abhängt,

- Übertragen der Mehrzahl von optischen Impulsen an eine Empfängervorrichtung (12) über einen Quantenkanal (10a); und
- Bestimmen eines gemeinsamen Schlüssels, der der Sendervorrichtung (11) und der Empfängervorrichtung (12) gemeinsam ist, aus der Codierer-Anfangsbitsequenz durch klassisches Post-Processing und mindestens eines von Übertragen von klassischen Informationen an die Empfängervorrichtung (12) und Empfangen weiterer klassischer Informationen von der Empfängervorrichtung (12).

14. Empfängervorrichtung (12) zum Quantenschlüsselaustausch, umfassend einen klassischen Prozessor (12a) und Mittel zum Empfangen und Messen von Quantensignalen und eingerichtet zum Ausführen der folgenden Schritte:

- Empfangen eines Quantensignals, das eine Mehrzahl von optischen Impulsen umfasst, von einer Sendervorrichtung (11) über einen Quantenkanal (10a),
- Bestimmen einer Decodierer-Anfangsbitsequenz aus der Mehrzahl von optischen Impulsen, wobei das Bestimmen für jeden optischen Impuls mindestens eines umfasst von:

- Bestimmen eines approximativen Intensitätsprofils des optischen Impulses durch Messen einer Mehrzahl von Intensitätswerten des optischen Impulses für eine Mehrzahl von Zeit-Bins und Bestimmen, aus dem approximativen Intensitätsprofil, eines ersten Decodierer-Werts von mindestens einem ersten Bit der Decodierer-Anfangsbitsequenz, und
- Bestimmen eines approximativen Phasenprofils des optischen Impulses durch Messen einer Mehrzahl von Phasenwerten des optischen Impulses für eine Mehrzahl von Zeit-Bins und Bestimmen, aus dem approximativen Phasenprofil, eines zweiten Decodierer-Werts von mindestens einem zweiten Bit der Decodierer-Anfangsbitsequenz; und

- Bestimmen eines gemeinsamen Schlüssels, der der Sendervorrichtung (11) und der Empfängervorrichtung (12) gemeinsam ist, aus der Decodierer-Anfangsbitsequenz durch klassisches Post-Processing und mindestens eines von Empfangen von klassischen Informationen von der Sendervorrichtung (11) und Übertragen weiterer klassischer Informationen an die Sendervorrichtung (11).

15. System für Quantenschlüsselaustausch, umfassend

- eine Sendervorrichtung (11), die einen klassischen Prozessor (11a) und Mittel zum Präparieren und Senden von Quantensignalen aufweist; und
- eine Empfängervorrichtung (12), die einen weiteren klassischen Prozessor (12a) und Mittel zum Empfangen und Messen von Quantensignalen aufweist,

wobei das System eingerichtet ist zum Ausführen der folgenden Schritte:

- Erzeugen einer Codierer-Anfangsbitsequenz in der Sendervorrichtung (11);
- Erzeugen, aus der ersten Anfangsbitsequenz, eines Quantensignals, das eine Mehrzahl von optischen Impulsen umfasst, in der Sendervorrichtung (11), wobei das Erzeugen jedes optischen Impulses der Mehrzahl von optischen Impulsen mindestens eines umfasst von:

- Modulieren eines Intensitätsprofils des optischen Impulses gemäß einer Intensitätsfunktion, die von einer Zeit und von einem ersten Codierer-Wert von mindestens einem ersten Bit der Codierer-Anfangsbitsequenz abhängt; und
- Modulieren eines Phasenprofils des optischen Impulses gemäß einer Phasenfunktion, die von einer Zeit und einem zweiten Codierer-Wert von mindestens einem zweiten Bit der Codierer-Anfangsbitsequenz abhängt,

- Übertragen der Mehrzahl von optischen Impulsen von der Sendervorrichtung (11) an die Empfängervorrichtung (12) über einen Quantenkanal (10a) und Empfangen der Mehrzahl von optischen Impulsen in der Empfängervorrichtung (12);
- Bestimmen einer Decodierer-Anfangsbitsequenz aus der Mehrzahl von optischen Impulsen, wobei das Bestimmen für jeden optischen Impuls mindestens eines umfasst von:

- Bestimmen eines approximativen Intensitätsprofils des optischen Impulses durch Messen einer Mehrzahl von Intensitätswerten des optischen Impulses für eine Mehrzahl von Zeit-Bins und Bestimmen, aus dem approximativen Intensitätsprofil, eines ersten Decodierer-Werts von mindestens einem ersten Bit der Decodierer-Anfangsbitsequenz, und
- Bestimmen eines approximativen Phasenprofils des optischen Impulses durch Messen einer Mehrzahl von Phasenwerten des optischen Impulses für eine Mehrzahl von Zeit-Bins und Bestimmen, aus dem approximativen Phasenprofil, eines zweiten Decodierer-Werts von mindestens einem zweiten Bit der Decodierer-Anfangsbitsequenz; und

- Bestimmen, in der Sendervorrichtung (11) aus der Codierer-Anfangsbitsequenz und in der Empfängervorrichtung (12) aus der Decodierer-Anfangsbitsequenz, durch klassisches Post-Processing und mindestens eines von Übertragen von klassischen Informationen von der Sendervorrichtung (11) an die Empfängervorrichtung (12) und Übertragen weiterer klassischer Informationen von der Empfängervorrichtung (12) an die Sendervorrichtung (11), eines gemeinsamen Schlüssels, der der Sendervorrichtung (11) und der Empfängervorrichtung (12) gemeinsam ist.

## Revendications

1. Procédé de codage pour la distribution quantique de clés, le procédé étant mis en œuvre dans un dispositif émetteur (11) comprenant un processeur classique (11a) et des moyens de préparation et de transmission de signaux quantiques, le procédé comprenant :

- la génération d'une séquence initiale de bits de l'encodeur ;
- la génération, à partir de la séquence initiale de bits de l'encodeur, d'un signal quantique comprenant une pluralité d'impulsions optiques, la génération de chaque impulsion optique de la pluralité d'impulsions optiques comprenant au moins l'une des étapes suivantes :

- la modulation d'un profil d'intensité de l'impulsion optique selon une fonction d'intensité qui dépend d'un temps et d'une première valeur d'encodeur d'au moins un premier bit de la séquence initiale de bits de l'encodeur ; et
- la modulation d'un profil de phase de l'impulsion optique selon une fonction de phase qui dépend d'un temps et d'une seconde valeur d'encodeur d'au moins un second bit de la séquence initiale de bits de l'encodeur ;

- la transmission de la pluralité d'impulsions optiques à un dispositif récepteur (12) via un canal quantique (10a) ; et
- la détermination d'une clé partagée partagée entre le dispositif émetteur (11) et le dispositif récepteur (12) à partir de la séquence initiale de bits de l'encodeur par post-traitement classique et au moins l'une des étapes suivantes : transmission d'une information classique au dispositif récepteur (12) et réception d'une information classique supplémentaire en provenance du dispositif récepteur (12).

2. Procédé selon la revendication 1, dans lequel chaque impulsion optique est générée à partir d'un faisceau laser et à l'aide d'un interféromètre de Mach-Zehnder (41).

3. Procédé selon l'une quelconque des revendications 1 ou 2, dans lequel

   - la génération de chaque impulsion optique de la pluralité d'impulsions optiques comprend la modulation du profil d'intensité de l'impulsion optique selon la fonction d'intensité et le profil d'intensité est modulé par au moins l'un d'un premier modulateur de phase et d'une intensité de la source laser ; et/ou
   - la génération de chaque impulsion optique de la pluralité d'impulsions optiques comprend la modulation du profil de phase de l'impulsion optique selon la fonction de phase et le profil de phase est modulé par un second modulateur de phase.

4. Procédé selon au moins l'une quelconque des revendications précédentes, dans lequel

   - la génération de chaque impulsion optique de la pluralité d'impulsions optiques comprend la modulation du profil d'intensité de l'impulsion optique selon la fonction d'intensité et la fonction d'intensité comprend, en fonction de la première valeur d'encodeur, une composante oscillatoire à fréquence dépendante du temps ; et/ou
   - la génération de chaque impulsion optique de la pluralité d'impulsions optiques comprend la modulation du profil de phase de l'impulsion optique selon la fonction de phase et la fonction de phase comprend, en fonction de la seconde valeur d'encodeur, une autre composante oscillatoire à fréquence dépendante du temps.

5. Procédé selon au moins l'une quelconque des revendications précédentes, dans lequel la fonction d'intensité comprend, en fonction de la première valeur d'encodeur, une composante de balayage en fréquence, de préférence au moins l'une d'une composante de balayage en fréquence linéaire, d'une composante de balayage en fréquence quadratique, d'une composante de balayage en fréquence cubique et d'une composante de balayage en fréquence exponentielle.

6. Procédé selon au moins l'une quelconque des revendications précédentes, dans lequel

   - la génération de chaque impulsion optique de la pluralité d'impulsions optiques comprend la modulation du profil d'intensité de l'impulsion optique selon la fonction d'intensité et la fonction d'intensité dépend de la première valeur d'encodeur d'au moins deux premiers bits de la séquence initiale de bits de l'encodeur ; et/ou
   - la génération de chaque impulsion optique de la pluralité d'impulsions optiques comprend la modulation du profil de phase de l'impulsion optique selon la fonction de phase et la fonction de phase dépend de la seconde valeur d'encodeur d'au moins deux seconds bits de la séquence initiale de bits de l'encodeur.

7. Procédé selon au moins l'une quelconque des revendications précédentes, dans lequel chaque impulsion optique présente une durée d'impulsion de 1 ns à 1000 ns, de préférence de 50 ns à 200 ns, plus préférentiellement de 80 ns à 120 ns.

8. Procédé de décodage pour la distribution quantique de clés, le procédé étant mis en œuvre dans un dispositif récepteur (12) comprenant un processeur classique (12a) et des moyens de réception et de mesure de signaux quantiques, le procédé comprenant :

   - la réception d'un signal quantique comprenant une pluralité d'impulsions optiques en provenance d'un dispositif émetteur (11) via un canal quantique (10a) ;
   - la détermination d'une séquence initiale de bits du décodeur à partir de la pluralité d'impulsions optiques, la détermination comprenant, pour chaque impulsion optique, au moins l'une des étapes suivantes :

      - la détermination d'un profil d'intensité approximatif de l'impulsion optique par mesure d'une pluralité de valeurs d'intensité de l'impulsion optique pour une pluralité d'intervalles temporels, et la détermination, à partir du profil d'intensité approximatif, d'une première valeur de décodeur d'au moins un premier bit de la séquence initiale de bits du décodeur, et
      - la détermination d'un profil de phase approximatif de l'impulsion optique par mesure d'une pluralité de valeurs de phase de l'impulsion optique pour une pluralité d'intervalles temporels, et la détermination, à partir du profil de phase approximatif, d'une seconde valeur de décodeur d'au moins un second bit de la séquence initiale de bits du décodeur ; et

   - la détermination d'une clé partagée partagée entre le dispositif émetteur (11) et le dispositif récepteur (12) à partir de la séquence initiale de bits du décodeur par post-traitement classique et au moins l'une des étapes suivantes : réception d'une information classique en provenance du dispositif émetteur (11) et transmission d'une information classique supplémentaire au dispositif émetteur (11).

9. Procédé selon la revendication 8, dans lequel

- la détermination de la séquence initiale de bits du décodeur à partir de la pluralité d'impulsions optiques comprend, pour chaque impulsion optique, la détermination du profil d'intensité approximatif de l'impulsion optique et la détermination de la première valeur de décodeur comprend la comparaison du profil d'intensité approximatif avec des profils d'intensité approximatifs idéaux ; et/ou
- la détermination de la séquence initiale de bits du décodeur à partir de la pluralité d'impulsions optiques comprend, pour chaque impulsion optique, la détermination du profil de phase approximatif de l'impulsion optique et la détermination de la seconde valeur de décodeur comprend la comparaison du profil de phase approximatif avec des profils de phase approximatifs idéaux.

10. Procédé selon la revendication 9, comprenant au moins l'une des étapes suivantes :

- la détermination de la séquence initiale de bits du décodeur à partir de la pluralité d'impulsions optiques comprend, pour chaque impulsion optique, la détermination du profil d'intensité approximatif de l'impulsion optique et la détermination d'une première différence de corrélateur mesurée à partir du profil d'intensité approximatif et des profils d'intensité approximatifs idéaux et la détermination de la première valeur de décodeur par comparaison de la première différence de corrélateur mesurée avec une première valeur seuil ; et
- la détermination de la séquence initiale de bits du décodeur à partir de la pluralité d'impulsions optiques comprend, pour chaque impulsion optique, la détermination du profil de phase approximatif de l'impulsion optique

et la détermination d'une seconde différence de corrélateur mesurée à partir du profil de phase approximatif et des profils de phase approximatifs idéaux et la détermination de la seconde valeur de décodeur par comparaison de la seconde différence de corrélateur mesurée avec une seconde valeur seuil.

11. Procédé selon au moins l'une quelconque des revendications précédentes, comprenant en outre la détermination de pertes de signal optique le long du canal quantique (10a), de préférence des pertes de signal optique dépendant d'une position le long du canal quantique (10a).

12. Procédé de distribution quantique de clés, le procédé étant mis en œuvre dans un système comprenant

- un dispositif émetteur (11) comprenant un processeur classique (11a) et des moyens de préparation et de transmission de signaux quantiques ; et
- un dispositif récepteur (12) comprenant un autre processeur classique (12a) et des moyens de réception et de mesure de signaux quantiques,

le procédé comprenant :

- la génération d'une séquence initiale de bits de l'encodeur dans le dispositif émetteur (11)
- la génération, à partir de la séquence initiale de bits de l'encodeur, d'un signal quantique comprenant une pluralité d'impulsions optiques dans le dispositif émetteur (11), la génération de chaque impulsion optique de la pluralité d'impulsions optiques comprenant au moins l'une des étapes suivantes :

- la modulation d'un profil d'intensité de l'impulsion optique selon une fonction d'intensité qui dépend d'un temps et d'une première valeur d'encodeur d'au moins un premier bit de la séquence initiale de bits de l'encodeur et
- la modulation d'un profil de phase de l'impulsion optique selon une fonction de phase qui dépend d'un temps et d'une seconde valeur d'encodeur d'au moins un second bit de la séquence initiale de bits de l'encodeur ;
- la transmission de la pluralité d'impulsions optiques du dispositif émetteur (11) au dispositif récepteur (12) via un canal quantique (10a) et la réception de la pluralité d'impulsions optiques dans le dispositif récepteur (12) ;
- la détermination d'une séquence initiale de bits du décodeur à partir de la pluralité d'impulsions optiques, la détermination comprenant, pour chaque impulsion optique, au moins l'une des étapes suivantes :

- la détermination d'un profil d'intensité approximatif de l'impulsion optique par mesure d'une pluralité de valeurs d'intensité de l'impulsion optique pour une pluralité d'intervalles temporels, et la détermination, à partir du profil d'intensité approximatif, d'une première valeur de décodeur d'au moins un premier bit de la séquence initiale de bits du décodeur ; et

- la détermination d'un profil de phase approximatif de l'impulsion optique par mesure d'une pluralité de valeurs de phase de l'impulsion optique pour une pluralité d'intervalles temporels, et la détermination, à partir du profil de phase approximatif, d'une seconde valeur de décodeur d'au moins un second bit de la séquence initiale de bits du décodeur ; et

- la détermination, dans le dispositif émetteur (11) à partir de la séquence initiale de bits de l'encodeur et dans le dispositif récepteur (12) à partir de la séquence initiale de bits du décodeur, par post-traitement classique et au moins l'une des étapes suivantes : transmission d'une information classique du dispositif émetteur (11) au dispositif récepteur (12) et transmission d'une information classique supplémentaire du dispositif récepteur (12) au dispositif émetteur (11), d'une clé partagée partagée entre le dispositif émetteur (11) et le dispositif récepteur (12).

13. Dispositif émetteur (11) pour la distribution quantique de clés comprenant un processeur classique (11a) et des moyens de préparation et de transmission de signaux quantiques et étant configuré pour mettre en œuvre les étapes suivantes :

- la génération d'une séquence initiale de bits de l'encodeur ;
- la génération, à partir de la séquence initiale de bits de l'encodeur, d'un signal quantique comprenant une pluralité d'impulsions optiques, la génération de chaque impulsion optique de la pluralité d'impulsions optiques comprenant au moins l'une des étapes suivantes :

- la modulation d'un profil d'intensité de l'impulsion optique selon une fonction d'intensité qui dépend d'un temps et d'une première valeur d'encodeur d'au moins un premier bit de la séquence initiale de bits de l'encodeur et
- la modulation d'un profil de phase de l'impulsion optique selon une fonction de phase qui dépend d'un temps et d'une seconde valeur d'encodeur d'au moins un second bit de la séquence initiale de bits de l'encodeur,

- la transmission de la pluralité d'impulsions optiques à un dispositif récepteur (12) via un canal quantique (10a) ; et

- la détermination d'une clé partagée partagée entre le dispositif émetteur (11) et le dispositif récepteur (12) à partir de la séquence initiale de bits de l'encodeur par post-traitement classique et au moins l'une des étapes suivantes : transmission d'une information classique au dispositif récepteur (12) et réception d'une information classique supplémentaire en provenance du dispositif récepteur (12).

14. Dispositif récepteur (12) pour la distribution quantique de clés comprenant un processeur classique (12a) et des moyens de réception et de mesure de signaux quantiques et étant configuré pour mettre en oeuvre les étapes suivantes :

- la réception d'un signal quantique comprenant une pluralité d'impulsions optiques en provenance d'un dispositif émetteur (11) via un canal quantique (10a),

- la détermination d'une séquence initiale de bits du décodeur à partir de la pluralité d'impulsions optiques, la détermination comprenant, pour chaque impulsion optique, au moins l'une des étapes suivantes :

- la détermination d'un profil d'intensité approximatif de l'impulsion optique par mesure d'une pluralité de valeurs d'intensité de l'impulsion optique pour une pluralité d'intervalles temporels et la détermination, à partir du profil d'intensité approximatif, d'une première valeur de décodeur d'au moins un premier bit de la séquence initiale de bits du décodeur, et
- la détermination d'un profil de phase approximatif de l'impulsion optique par mesure d'une pluralité de valeurs de phase de l'impulsion optique pour une pluralité d'intervalles temporels et la détermination, à partir du profil de phase approximatif, d'une seconde valeur de décodeur d'au moins un second bit de la séquence initiale de bits du décodeur ; et

- la détermination d'une clé partagée partagée entre le dispositif émetteur (11) et le dispositif récepteur (12) à partir de la séquence initiale de bits du décodeur par post-traitement classique et au moins l'une des étapes suivantes : réception d'une information classique en provenance du dispositif émetteur (11) et transmission d'une information classique supplémentaire au dispositif émetteur (11).

15. Système de distribution quantique de clés comprenant

- un dispositif émetteur (11) comprenant un processeur classique (11a) et des moyens de préparation et de transmission de signaux quantiques ; et
- un dispositif récepteur (12) comprenant un autre processeur classique (12a) et des moyens de réception et de mesure de signaux quantiques,

le système étant configuré pour mettre en œuvre les étapes suivantes :

- la génération d'une séquence initiale de bits de l'encodeur dans le dispositif émetteur (11) ;
- la génération, à partir de la première séquence initiale de bits, d'un signal quantique comprenant une pluralité d'impulsions optiques dans le dispositif émetteur (11), la génération de chaque impulsion optique de la pluralité d'impulsions optiques comprenant au moins l'une des étapes suivantes :

  - la modulation d'un profil d'intensité de l'impulsion optique selon une fonction d'intensité qui dépend d'un temps et d'une première valeur d'encodeur d'au moins un premier bit de la séquence initiale de bits de l'encodeur ; et
  - la modulation d'un profil de phase de l'impulsion optique selon une fonction de phase qui dépend d'un temps et d'une seconde valeur d'encodeur d'au moins un second bit de la séquence initiale de bits de l'encodeur,
  - la transmission de la pluralité d'impulsions optiques du dispositif émetteur (11) au dispositif récepteur (12) via un canal quantique (10a) et la réception de la pluralité d'impulsions optiques dans le dispositif récepteur (12) ;
  - la détermination d'une séquence initiale de bits du décodeur à partir de la pluralité d'impulsions optiques, la détermination comprenant, pour chaque impulsion optique, au moins l'une des étapes suivantes :

    - la détermination d'un profil d'intensité approximatif de l'impulsion optique par mesure d'une pluralité de valeurs d'intensité de l'impulsion optique pour une pluralité d'intervalles temporels, et la détermination, à partir du profil d'intensité approximatif, d'une première valeur de décodeur d'au moins un premier bit de la séquence initiale de bits du décodeur, et
    - la détermination d'un profil de phase approximatif de l'impulsion optique par mesure d'une pluralité de valeurs de phase de l'impulsion optique pour une pluralité d'intervalles temporels et - la détermination, à partir du profil de phase approximatif, d'une seconde valeur de décodeur d'au moins un second bit de la séquence initiale de bits du décodeur ; et

- la détermination, dans le dispositif émetteur (11) à partir de la séquence initiale de bits de l'encodeur et dans le dispositif récepteur (12) à partir de la séquence initiale de bits du décodeur, par post-traitement classique et au moins l'une des étapes suivantes : transmission d'une information classique du dispositif émetteur (11) au dispositif récepteur (12) et transmission d'une information classique supplémentaire du dispositif récepteur (12) au dispositif émetteur (11), d'une clé partagée partagée entre le dispositif émetteur (11) et le dispositif récepteur (12).

Fig. 1

EP 4 572 224 B1

20

20a

21

22

23

24

25

26

27

28

29

Fig. 2

Fig. 3

75

30

34

33

32

31

Distance, km

Backscattered power, dB

Fig. 4

Fig. 5

EP 4 572 224 B1

EP 4 572 224 B1

Fig. 6

Fig. 7

EP 4 572 224 B1

EP 4 572 224 B1

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2529228 A
- US 10153848 B2
- CN 110620655 A
- CN 205961140 U
- US 20080037998 A1

**Non-patent literature cited in the description**

- **KARPINSKI et al.** *Adv. Quantum Technol.*, 2021, vol. 4, 2000150